# EUROPEAN PATENT SPECIFICATION

(11) **EP 2 754 892 B1**
(45) Date of publication and mention of the grant of the patent: **09.03.2016**
(21) Application number: 12879819.6
(22) Date of filing: 14.09.2012
(51) Int. Cl.: F03D 13/00, F03B 11/06, F03D 80/70

(54) **METHOD FOR ASSEMBLING SHAFTING OF REGENERATED ENERGY POWER GENERATION DEVICE, AND TOOL FOR ASSEMBLING SHAFTING**
VERFAHREN ZUR MONTAGE EINES WELLENSTRANGS AN EINER REGENERIERTEN STROMERZEUGUNGSVORRICHTUNG UND WERKZEUG ZUR MONTAGE DES WELLENSTRANGS
PROCÉDÉ D'ASSEMBLAGE D'UNE LIGNE D'ARBRES D'UN DISPOSITIF GÉNÉRATEUR DE PUISSANCE À ÉNERGIE RÉCUPÉRÉE, ET OUTIL D'ASSEMBLAGE D'UNE LIGNE D'ARBRES

(30) Priority: 29.06.2012 WO PCT/JP2012/004218
(43) Date of publication of application: 16.07.2014
(73) Proprietor: Mitsubishi Heavy Industries, Ltd., Tokyo 108-8215 (JP)
(72) Inventor: KAMEDA, Takuro, Tokyo 108-8215 (JP); FURUKAWA, Syogo, Tokyo 108-8215 (JP)
(74) Representative: Intès, Didier Gérard André
(86) International application number: PCT/JP2012/073591
(87) International publication number: WO 2014/002297

(56) References cited:
- DE-A1-102008 052 412
- JP-A- 2004 092 755
- JP-A- 2007 263 305
- JP-A- 2011 526 985
- US-A1- 2012 025 538
- US-A1- 2012 134 811

## Description

### TECHNICAL FIELD

The present disclosure relates to a shafting assembly method and a shafting assembly jig for a power generating apparatus of a renewable energy type. A power generating apparatus of a renewable energy type herein is a power generating apparatus utilizing a renewable energy such as wind, tidal current, ocean current, and river current. For instance, a wind turbine generator, a tidal current generator, an ocean current generator, or a river current generator can be named.

### BACKGROUND ART

Recently, from the perspective of preserving the global environment, a power generating apparatus of a renewable energy type including a wind turbine generator utilizing wind energy and a generator utilizing tidal current, ocean current or river current has become increasingly popular. There is known a power generating apparatus of a renewable energy type comprising: a blade which receives the renewable energy; a hub to which the blade is attached; a rotation shaft coupled to the hub; and a generator which converts rotation energy of the rotation shaft to electrical power.

A power generating apparatus of a renewable energy type has been growing in size from the perspective of improving power generation efficiency, and thus the load which acts on the rotation shaft tends to increase. Therefore, there has been proposed a power generating apparatus of a renewable energy where the rotation is supported on the nacelle using a pair of bearings.

For instance, in the wind turbine generators disclosed in Patent Documents 1 to 6, a rotation shaft is supported on a nacelle via a pair of bearings including a front bearing which is closer to a hub and a rear bearing which is farther from the hub. Patent Document 6 also discloses a configuration in which a pair of bearings supporting a rotation shaft is provided in common as an integrated cylindrical body. Patent Document 7 discloses a wind turbine generator which comprises means for measuring the loads.

### Citation List

### Patent Literature

[Patent Document 1]
   WO2011/135703A
[Patent Document 2]
   US2011/0266806A
[Patent Document 3]
   WO2009/080712A
[Patent Document 4]
   WO2011/016108A
[Patent Document 5]
   US2011/0143880A
[Patent Document 6]
   KR10-2011-0070623A
[Patent Document 7] US 2012/134811

### SUMMARY

### Technical Problem

In a power generating apparatus of a renewable energy type where a rotation shaft is supported by a pair of bearings, misalignment of the centers of the pair of bearings supporting the rotation shaft causes the load component in an unexpected direction to act on the bearings, which raises the possibility of drastic decrease of the bearing lifetime. Therefore, upon mounting the rotation shaft onto the nacelle, it is necessary to adjust the position of each bearing so as to secure the concentricity between the bearings.

In this regard, Patent Documents 1 to 5 do not describe a sufficient countermeasure for securing the concentricity between the bearings upon mounting the rotation shaft onto the nacelle.

Also, in the wind turbine generator described in Patent Document 6, as the size of the integrated cylindrical body formed by providing the bearing housing of each bearing in common is extremely large, it is difficult to manufacture a cylindrical body (bearing housing) of high quality and accuracy.

An object of one embodiment of the present invention is to provide an installation method of a shafting of a power generating apparatus of a renewable energy type and a wind turbine generator, whereby it is possible to accurately position a pair of bearings which supports a rotation shaft upon mounting the rotation shaft and whereby it is possible to easily manufacture the bearings.

### Solution to Problem

An installation method according to at least one embodiment of the present invention is for a shafting of a power generating apparatus of a renewable energy type which includes: at least one blade; a hub to which the at least one blade is attached; a rotation shaft coupled to the hub; a first bearing and a second bearing which support the rotation shaft; and a nacelle including a nacelle base plate which supports each of the bearings from below, and the method comprises:
a step of mounting the first bearing and the second bearing to the rotation shaft;
a step of connecting a bearing housing of the first bearing and a bearing housing of the second bearing by a connection member so that the first bearing and the second bearing are concentric with each other; and
a step of mounting the rotation shaft onto the nacelle base plate along with the first bearing and the second bearing in a state where the first bearing and the second bearing are maintained concentric with each other.

According to the above installation method of shafting of a power generating apparatus of a renewable energy type, before mounting the rotation shaft onto the nacelle base plate, the first bearing and the second bearing are mounted to the rotation shaft and the bearing housing of the first bearing and the bearing housing of the second bearing are connected by a connection member so that the first bearing and the second bearing are concentric with each other. As a result, as the first bearing and the second bearing are maintained substantially concentric when mounting the rotation shaft onto the nacelle base plate, it possible to perform position determination for the first bearing and the second bearing accurately.

Also, instead of providing the bearing housing of each of the bearings in common as an integrated cylindrical body, the bearing housing of the first bearing and the bearing housing of the second bearing are configured separately from each other and connected by a connection member. As a result, it is possible to easily manufacture each of the bearing housings with high quality and accuracy.

In some embodiment, in the step of connecting by the connection member, each of the bearing housing of the first bearing and the bearing housing of the second bearing may be positioned with respect to the connection member in a radial direction of the rotation shaft by socket-and-spigot joint fitting.

As a result, by positioning the first bearing and the second bearing in the radial direction by socket-and-spigot joint fitting, it is possible to perform alignment of the centers of the first bearing and the second bearing, and thus to prevent drastic decrease of the bearing lifetime caused by misalignment of the centers of the first bearing and the second bearing.

In some embodiment, in the step of mounting the first bearing and the second bearing, the rotation shaft may be inserted in sequence into the first bearing and the second bearing each of which has a seamless annular shape in a state where the rotation shaft is standing upright along the vertical direction.

As a result, by performing the mounting of the first bearing and the second bearing in the state where the rotation shaft is standing upright, it is possible to use a bearing of an annular shape and to perform the bearing mounting work efficiently even with a rotation shaft of a large diameter.

In some embodiment, in the step of mounting the rotation shaft, the first bearing and the second bearing may be fixed onto the nacelle base plate so as to prevent at least a misalignment of each of the first bearing and the second bearing in a horizontal direction perpendicular to an axial direction of the rotation shaft.

As various component loads are transmitted to the rotation shaft from the renewable energy source, there is a possibility that the loads cause slight misalignment of the centers of the first bearing and the second bearing. Herein, by fixing the bearings to the nacelle base plate so as to prevent misalignment of the first bearing and the second bearing in the horizontal direction perpendicular to the axial direction of the rotation shaft, it is possible to secure the concentricity during operation of the power generating apparatus of a renewable energy type.

In some embodiment, in the step of mounting the rotation shaft, a position in the horizontal direction of at least one of the first bearing and the second bearing with respect to the nacelle base plate may be adjusted, and then the first bearing and second bearing may be fixed onto the nacelle base plate in a state where the position is adjusted.

As a result, by adjusting the positions in the horizontal direction of the first bearing and the second bearing before fixing the first bearing and the second bearing to the nacelle base plate, it is possible to further improve the positional accuracy of each of the bearings. For instance, in a case where the first bearing and the second bearing are fixed by removing the connection frame after the rotation shaft is mounted onto the nacelle base plate, even if the centers have been slightly misaligned upon removing the connection frame, it is possible to correct the misalignment by adjusting the positions in the horizontal direction.

In some embodiment, in the step of mounting the rotation shaft, a relative position between said each of the bearings and the nacelle base plate in the horizontal direction may be adjusted by placing the first bearing and the second bearing on the nacelle base plate so that a projection formed on one of said each of the bearings or the nacelle base plate to extend in the axial direction of the rotation shaft is fit into a recess formed on the other one of each of the bearings or the nacelle base plate to extend in the axial direction, and by disposing a liner between the projection and the recess.

As a projection formed on one of said each of the bearings or the nacelle base plate is fit into a recess formed on the other as described above, it is possible to realize the fixing in the horizontal direction with a simple configuration. Also, as the relative position between said each bearing and the nacelle base plate is adjusted by inserting a liner between the projection and the recess, it is possible to fix each of the bearings in the state where the bearings are being positioned with high accuracy by using a liner of an appropriate thickness.

In some embodiment, in the step of mounting the rotation shaft, a relative position between each of the first bearing and the second bearing and the nacelle base plate may be adjusted and then said each of the bearings may be fixed onto the nacelle base plate using an eccentric pin.

As an eccentric pin is used for fixing the first bearing and the second bearing to the nacelle base plate as described above, it is possible to fix each of the bearings to the nacelle base plate even when the pin holes are misaligned due to adjustment of the relative position between said each bearing and the nacelle base plate, and also, it is possible to maintain the relative position between said each bearing and the nacelle base plate by the eccentric pin even when the load in the horizontal direction is acting after the fixing.

In some embodiment, in the step of mounting the rotation shaft, a height of each of the first bearing and the second bearing with respect to the nacelle base plate may be adjusted by inserting a shim between each of the first bearing and the second bearing and the nacelle base plate.

As a result, it is possible to position the first bearing and the second bearing accurately also with respect to the height direction.

In some embodiment, in the step of mounting the rotation shaft, after mounting the rotation shaft onto the nacelle base plate, an upper part of the bearing housing of the first bearing and an upper part of the bearing housing of the second bearing may be connected by a connection frame.

As a result, the bearing housing of the first bearing and the bearing housing of the second bearing are connected to each other by a connection frame and the bearing housing of each of the bearings is bound by the connection frame. Thus, even if a complex load and moment from the renewable energy source is inputted into the rotation shaft during operation of the power generating apparatus of a renewable energy type, it is possible to maintain the bearings concentric by the function of the connection frame.

In some embodiment, in the step of mounting the rotation shaft, a height of the connection frame with respect to the nacelle base plate may be adjusted by inserting a shim between the nacelle base plate and a leg of the connection frame which connects the first bearing and the second bearing, and then the leg may be fixed onto the nacelle base plate.

As a result, it is possible to adjust the height of the connection frame appropriately in accordance with the height of the bearing housing of each bearing.

In some embodiment, the connection member may remain after mounting the rotation shaft to the nacelle, the connection member providing a connection between the bearing housing of the first bearing and the bearing housing of the second bearing while the power generating apparatus of a renewable energy type is operated.

As a result, by having the connection member remain being attached to the rotation shaft, it is possible to continuously maintain the state where the concentricity of each bearing has been secured once upon mounting the rotation shaft until operation of the power generating apparatus of a renewable energy type.

A power generating apparatus of a renewable energy type which generates electrical power utilizing a renewable energy according to one embodiment of the present invention includes: at least one blade; a hub to which the at least one blade is attached; a rotation shaft coupled to the hub; a first bearing and a second bearing which support the rotation shaft; a nacelle including a nacelle base plate which supports each of the bearings from below; and a connection member which connects the first bearing and the second bearing so that the first bearing and the second bearing are concentric with each other,
wherein the first bearing and the second bearing are connected by the connection member so as to be concentric with each other by positioning the first bearing and an end of the connection member in a radial direction (of the rotation shaft) by socket-and-spigot joint fitting, and positioning by the second bearing and other end of the connection member in the radial direction by socket-and-spigot joint fitting.

According to the above power generating apparatus of a renewable energy type, by providing a connection member which connects the first bearing and the second bearing so that positions of the connection member and each of the first bearing and the second bearing are determined in the radial direction by socket-and-spigot joint fitting, it is possible to secure the concentricity between the first bearing and the second bearing with high accuracy. Also, even if a complex load and moment from the renewable energy source is inputted into the rotation shaft during operation of the power generating apparatus of a renewable energy type, it is possible to maintain the bearings concentric by the function of the connection member.

Moreover, instead of providing the bearing housing of each of the bearings in common as an integrated cylindrical body, the bearing housing of the first bearing and the bearing housing of the second bearing are configured separately from each other and connected by the connection member. As a result, it is possible to easily manufacture each of the bearing housings with high quality and accuracy.

In some embodiment, the power generating apparatus of a renewable energy type may further comprise a driven device which is attached to an end of the rotation shaft opposite to the hub, supported by the nacelle base plate, and configured to be driven by the rotation shaft, and the first bearing may be a radial bearing disposed on a hub side and the second bearing may be a thrust bearing disposed on a driven device side. Also, the first bearing may be a double row cylindrical roller bearing and the second bearing may be a double row taper roller bearing.

By adopting a thrust bearing as a second bearing disposed on the driven device side as described above, it is possible to reduce the distance from the thrust bearing to the driven device, the distance being a reference of expansion of the rotation shaft, and thus to reduce the relative misalignment between the driven device and the nacelle base plate caused by the expansion of the rotation shaft (for instance, the heat expansion of the rotation shaft which is heated by heat transmission from the driven device side or heat generation of the bearing itself). As a result, it is possible to reduce the possibility of damage to a support between the driven device and the nacelle base plate or to a piping connected to surrounding equipments due to excessive loads acting on the support or the piping, the loads being caused by the relative misalignment between the driven device and the nacelle base plate. Also, by adopting a radial bearing as a first bearing disposed on the hub side, it is possible to support the radial load transmitted to the rotation shaft from the blade and the hub by the first bearing disposed on the closer side to the hub.

In some embodiment, the first bearing may be disposed on the hub side and the second bearing may be disposed at a position farther from the hub than the first bearing,
the rotation shaft may include a first area to which the first bearing is attached and a second area to which the second bearing is attached, the rotation shaft having a diameter which decreases from the first area toward the second area,
a first stepped portion which restricts an inner race of the first bearing from moving toward the hub side may be formed on the first area and a second stepped portion which restricts an inner race of the second bearing from moving toward the hub side is formed on the second area, and
an internal diameter of the inner race of the first bearing may be greater than a maximum diameter of the rotation shaft at the second stepped portion.

In the case where the rotation shaft is supported by the first bearing and the second bearing, the first bearing receives larger load because the first bearing is disposed closer to the hub compared to the second bearing. Therefore, by decreasing the diameter of the rotation shaft from the first area where the first bearing is mounted toward the second area where the second bearing is mounted, it is possible to adopt the first bearing of a larger size than that of the second bearing 22 and thus to improve durability of the first bearing. Also, as the rotation shaft around the second area has a relatively small diameter, it is possible to reduce weight of the rotation shaft and to reduce weight and size of the second bearing.

Moreover, by providing a first stepped portion which restricts the inner race of the first bearing from moving toward the hub side and a second stepped portion which restricts the inner race of the second bearing from moving toward the hub side on the first area and the second area respectively, and by setting the internal diameter of the inner race of the first bearing larger than the maximum diameter of the rotation shaft at the second stepped portion, it is possible to adopt the bearing mounting method in which the first bearing and the second bearing are put around the rotation shaft in this order from the end at the opposite side of the hub. As a result, it is possible to easily perform the mounting work of the first bearing and the second bearing to the rotation shaft.

In some embodiment, the power generating apparatus of a renewable energy type may be a wind turbine generator which generates electrical power from the wind serving as a renewable energy.

### Advantageous Effects

According to at least one embodiment of the present invention, as the first bearing and the second bearing are maintained substantially concentric with each other by a connection member upon mounting the rotation shaft onto the nacelle base plate, it is possible to perform the position determination for the first bearing and the second bearing with high accuracy.

Also, as the bearing housing of the first bearing and the bearing housing of the second bearing are configured separately and connected to each other by a connection member, it is possible to easily manufacture each bearing with high quality and accuracy.

### BRIEF DESCRIPTION OF DRAWINGS

Fig. 1 is schematic view of an overall configuration of a wind turbine generator according to one embodiment.
Fig. 2 is an oblique perspective view of an exemplary configuration inside a nacelle of a wind turbine generator according to one embodiment.
Fig. 3 is a side view of a shafting of the wind turbine generator shown in Fig. 2.
Fig. 4 is a cross-sectional view of the shafting shown in Fig. 3.
Fig. 5 is an enlarged view of an area indicated by reference "A" in Fig. 4.
Fig. 6 is an enlarged view of an area indicated by reference "B" in Fig. 4.
Figs. 7A to 7C are illustrations of the steps of mounting the first bearing to the rotation shaft according to one embodiment.
Figs. 8A to 8C are illustrations of the steps of fixing the spacer to the first bearing according to one embodiment.
Fig. 9 is an illustration of a socket-and-spigot joint between the spacer and the first bearing.
Figs. 10A to 10C are illustrations of the steps of mounting the second bearing to the rotation shaft according to one embodiment.
Fig. 11 is an illustration of a socket-and-spigot joint between the spacer and the second bearing.
Fig. 12 is an illustration of installation of the rotation shaft to the nacelle, where the first bearing and the second bearing are mounted to the rotation shaft.
Figs. 13A to 13C are illustrations of the steps of removing the spacer from a pair of bearing housings.
Fig. 14A is an illustration of the first bearing as seen from the rear side in the axial direction of the rotation shaft.
Fig. 14B is an illustration of the second bearing as seen from the rear side in the axial direction of the rotation shaft.
Fig. 15A is an oblique perspective view of a fitting joint between the bearing housing and the nacelle base plate.
Fig. 15B is a front view of a fitting joint between the bearing housing and the nacelle base plate.
Fig. 15C is an oblique perspective view of an exemplary configuration of a liner and a shim.
Fig. 16 is an illustration of a configuration for positioning the bearing housing using a shear pin.
Fig. 17 is a cross section of an area around the shear pin.
Fig. 18 is an oblique perspective view of an interior structure of a nacelle of a wind turbine generator including a connection frame provided between a pair of bearing housings.

### DETAILED DESCRIPTION OF EMBODIMENTS

Embodiments of the present invention will now be described in detail with reference to the accompanying drawings. It is intended, however, that unless particularly specified, dimensions, materials, shapes, relative positions and the like of components described in the embodiments shall be interpreted as illustrative only and not limitative of the scope of the present invention.

Hereinafter, a power generating apparatus of a renewable energy type according to one embodiment of the present invention will be described, and then, the installation method of the shafting thereof will be described.

While a wind turbine generator is described hereinafter as an example of a power generating apparatus of a renewable energy type, the embodiment of the present invention can be applied to other power generating apparatuses of a renewable energy type such as a tidal current generator, an ocean current generator, and a river current generator.

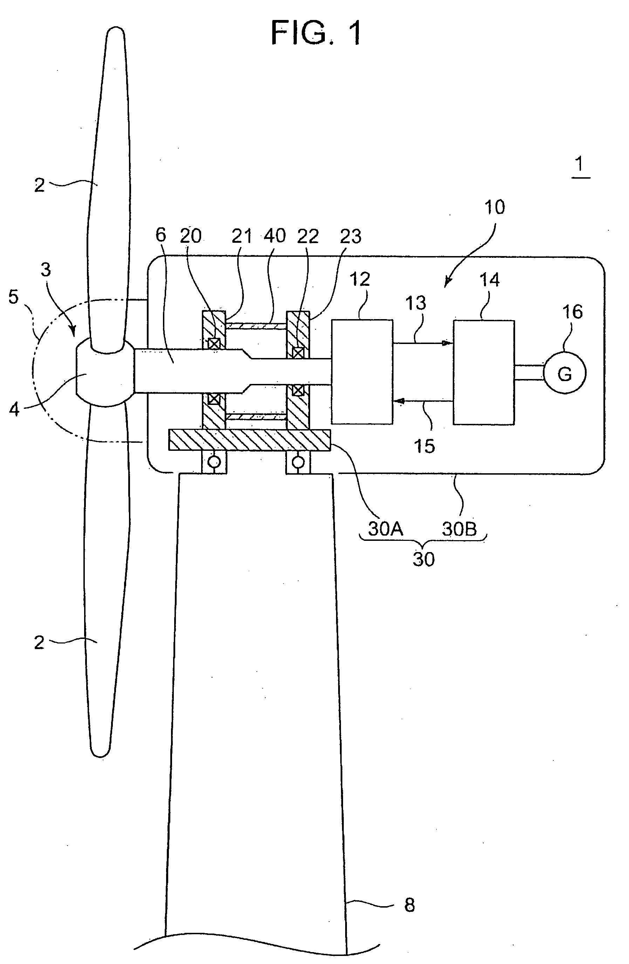

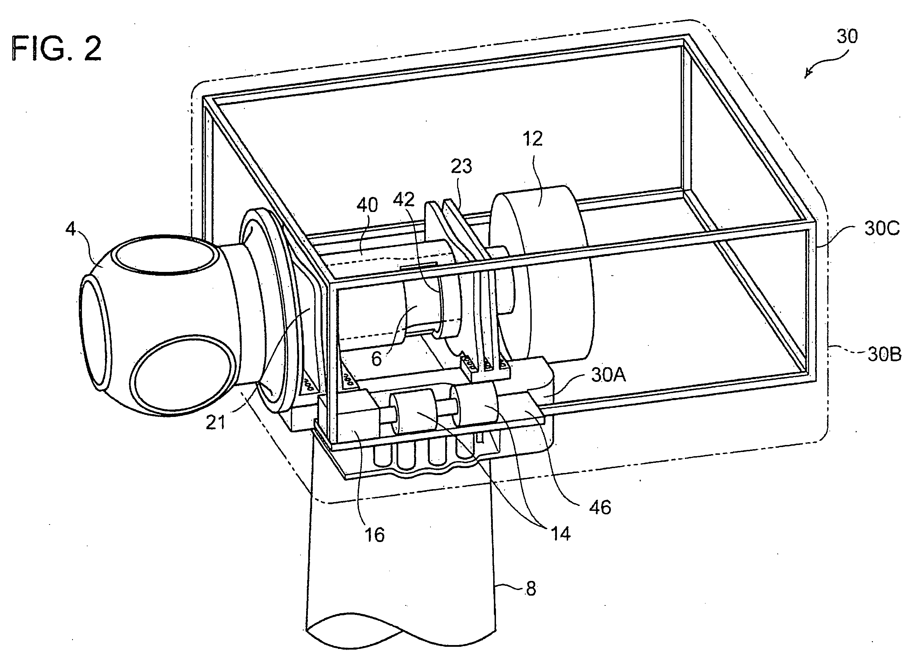

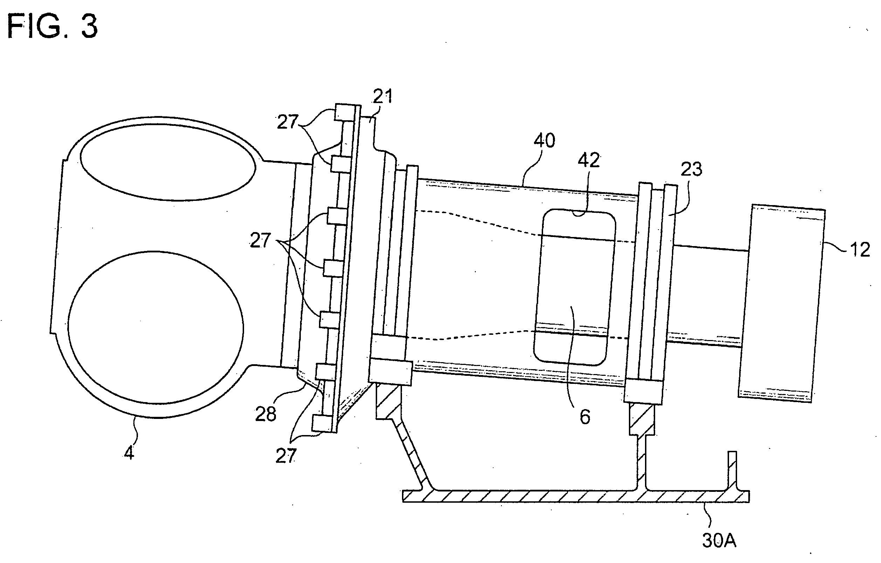

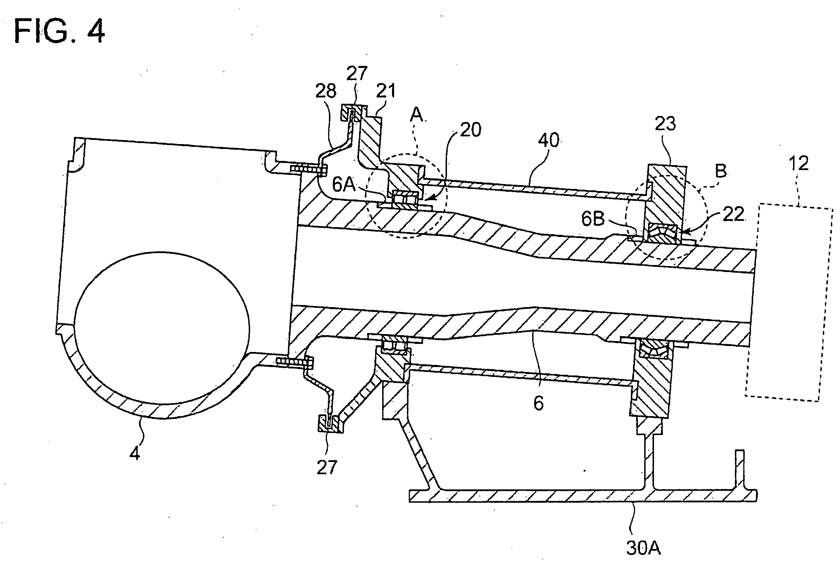

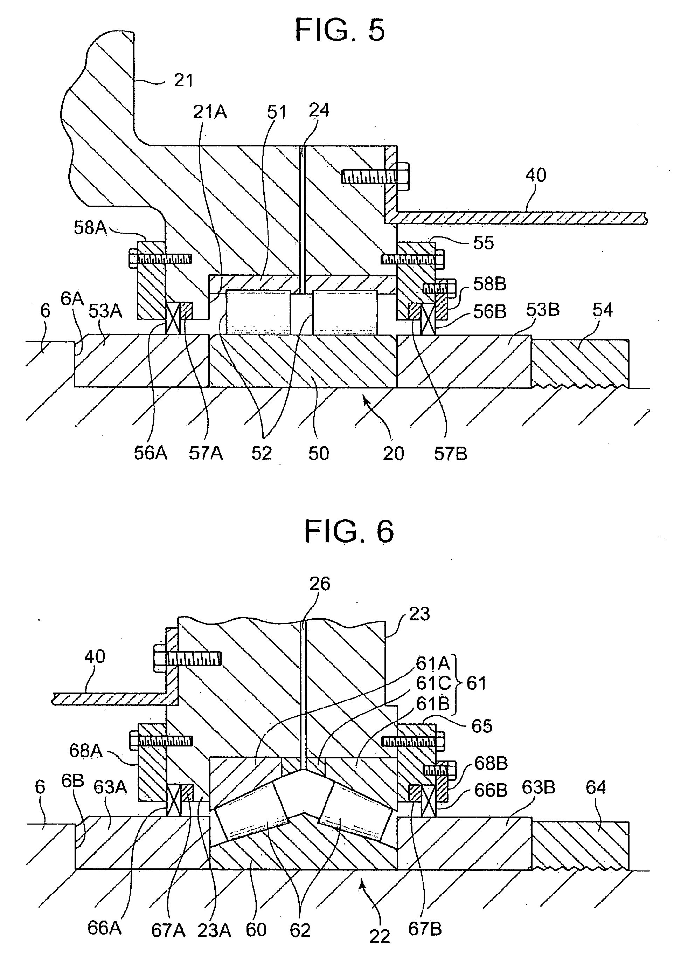

Fig. 1 is schematic view of an overall configuration of a wind turbine generator according to one embodiment. Fig. 2 is an oblique perspective view of an exemplary configuration inside a nacelle of a wind turbine generator according to one embodiment. Fig. 3 is a side view of a shafting of the wind turbine generator shown in Fig. 2. Fig. 4 is a cross-sectional view of the shafting shown in Fig. 3. Fig. 5 is an enlarged view of an area indicated by reference "A" of Fig. 4. Fig. 6 is an enlarged view of an area indicated by reference "B" of Fig.4.

As shown in Fig. 1, the wind turbine generator 1 includes a rotor 3 composed of at least one blade 2 and a hub 4, a rotation shaft 6 coupled to the hub 4, a generator 16 which generates electrical power, and a drive train 10 which transmits rotation energy of the rotation shaft 6 to the generator 16.

Herein, various equipments including the rotation shaft 6 may be housed in a nacelle 30 which is disposed atop a tower 8 standing on the water or on the ground and may be covered by a nacelle cover 30B of the nacelle 30. Also, the hub 4 may be covered by a hub cover 5.

In some embodiment, as shown in Fig. 1, the drive train 10 includes a hydraulic pump 12 attached to the rotation shaft 6, and a hydraulic motor 14 connected to the hydraulic pump 12 via a high pressure oil line 13 and a low pressure oil line 15. The hydraulic pump 12 is configured to be driven by the rotation shaft 6 and to pressurize a working oil so as to generate a high pressure working oil (pressurized oil). The outlet of the hydraulic pump 12 is connected to the inlet of the hydraulic motor 14 via the high pressure oil line 13. Thus, the pressurized oil generated in the hydraulic pump 12 is supplied to the hydraulic motor 14 via the high pressure oil line 13, so that the hydraulic motor 14 is driven by the pressurized oil. The low pressure working oil having performed work in the hydraulic motor 14 is returned again to the hydraulic pump 12 via the low pressure oil line 15 provided between the outlet of the hydraulic motor 14 and the inlet of the hydraulic pump 12. The output shaft of the hydraulic motor 14 is connected to the rotational shaft of the generator 16, so that rotation of the hydraulic motor 14 is inputted into the generator 16.

Herein, the number of each of the hydraulic pump 12, the hydraulic motor 14 and the generator 16 is not necessarily limited, and may be one at the least.

In one embodiment, the drive train 10 and the generator 16 are disposed inside the nacelle 30.

In the exemplary embodiment shown in Fig. 2, the nacelle 30 includes a nacelle base plate 30A which supports the bearing housing 21, 22 of each of the bearings 20, 22, a nacelle cover 30B which covers various equipments placed on the nacelle base plate 30A, and a nacelle frame 30C to which the nacelle cover 30B is fixed. The nacelle base plate 30A is formed of a cast steel such as a ductile cast iron or a high strength cast iron, for instance.

The hydraulic pump 12 is attached to an end of the rotation shaft 6. Also, at both sides of the rotation shaft 6, a pair of equipment placement tables is provided respectively (however, only the equipment placement table 46 at the near side is shown in Fig. 2), and a pair of a hydraulic motors 14 and a generator 16 are disposed on each of the equipment placement tables 46. The equipment placement tables 46 are supported by the nacelle base plate 30A and the nacelle frame 30C attached thereto.

The rotation shaft 6 is, as shown in Figs. 1 to 4, supported rotatably to the nacelle 30 via the first bearing 20 and the second bearing 22. The first bearing 20 is positioned at the hub 4 side and the second bearing 22 is positioned farther from the hub 4 compared to the first bearing 20. In some embodiment, the bearing housing 21 of the first bearing 20 and the bearing housing 23 of the second bearing 22 are supported by the nacelle base plate 30A of the nacelle 30, and also connected to each other by a connection member 40 of a cylindrical shape.

Herein, the bearing housing 21 of the first bearing 20 and an end of the connection member 40 are positioned in the radial direction by a socket-and-spigot joint, and the bearing housing 23 of the second bearing 22 and an end of the connection member 40 is positioned in the radial direction by a socket-and-spigot joint. As a result, the concentricity between the bearing housing 21 of the first bearing 20 and the bearing housing 23 of the second bearing 22 is secured. The specific configuration of the socket-and-spigot joint will be described later in detail.

Also, the connection member 40 may have a pair of cutouts 42 formed at both sides of the rotation shaft, respectively. The space formed by the cutout 42 can be used for a variety of purposes (for instance, suspension of components using a lift such as a crane).

Further, at least one brake caliper 27 is fixed directly or indirectly to the bearing housing 21 of the first bearing 20. The brake caliper 27 is configured to force a brake pad against a brake disc 28 which is fastened to the hub 4 with a flange of the rotation shaft 6, so as to apply braking force to the rotor 3 and the rotation shaft 6.

In one embodiment, as shown in Figs. 3 and 4, the rotation shaft 6 has a smaller diameter in the second area around the mounting position of the second bearing 22 (the second mounting position) compared to the diameter in the first area around the mounting position of the first bearing 20 (the first mounting position). In other words, the rotation shaft 6 has a diameter which decreases from the first area toward the second area.

In a case where the rotation shaft 6 is supported by a pair of the bearings 20, 22, the first bearing 20 is disposed closer to the hub 4 compared to the second bearing 22 and, thus receives larger load. Therefore, by decreasing the diameter of the rotation shaft 6 from the first area toward the second area, it is possible to adopt the first bearing 20 of a larger size than that of the second bearing 22 and thus to improve durability of the first bearing 20. Also, as the rotation shaft 6 at the area around the second mounting position has a relatively small diameter, it is possible to reduce weight of the rotation shaft 6 and to reduce weight and size of the second bearing 22.

Further, in the first area, a first stepped portion 6A is provided for restricting the inner race of the first bearing 20 from moving toward the hub 4. Similarly, in the second area, a second stepped portion 6B is provided for restricting the inner race of the second bearing 22 from moving toward the hub 4.

Also, the outer circumferential surface of the rotation shaft 6 is upraised so as to form the second stepped portion 6B, the diameter of the rotation shaft 6 slightly increasing at the upraised part. The diameter of the rotation shaft 6 at the upraised part is set smaller than the diameter of the inner race of the first bearing 20. As a result, it is possible to adopt the shafting assembly method in which the first bearing 20 and the second bearing 22 are fit around the rotation shaft 6 in this order from the end of the rotation haft 6 at the farther side from the hub 4, and to easily perform the mounting work of the first bearing 20 and the second bearing 22 to the rotation shaft 6.

In some embodiment, as shown in Fig. 5, the first bearing 20 includes an inner race 50 fit onto the outer circumference of the rotation shaft 6, an outer race 51 fit onto the inner circumference of the bearing housing 21, and a roller 52 provided between the inner race 50 and the outer race 51. All of the inner race 50, the outer race 51, and the bearing housing 21 have a seamless annular shape continuous in the circumferential direction, which is a so-called seamless structure.

In the exemplary embodiment shown in Fig. 5, the first bearing 20 is a cylindrical roller bearing (an example of a "radial bearing") which has a roller 52 formed of a cylindrical roller fit into a groove provided on the outer race 51 and which receives the radial load of the rotation shaft 6 at the cylindrical outer circumferential surface of the roller 52. Also, the cylindrical roller bearing is also called a "thrust free bearing", where the position of the roller 52 is restricted in the axial direction with respect to the outer race 51 but the roller 52 is movable in the axial direction with respect to the inner race 50.

Further, in the exemplary embodiment shown in Fig. 5, at both sides of the inner race 50 of the first bearing 20, a pair of inner race fixing rings (53A, 53B) are provided, respectively. That is, the inner race 50 is disposed so as to be sandwiched between a first inner race fixing ring 53A positioned on the side closer to the hub 4 and a second inner race fixing ring 53B positioned on the side farther from the hub 4.

The first inner race fixing ring 53A is fit onto the rotation shaft 6 so as to contact the first stepped portion 6A provided for the rotation shaft 6. Also, on the opposite side of the inner race 50 across the second inner race fixing ring 53B, a fixing nut 54 is disposed, the fixing nut 54 having a female thread which is configured to be screwed to a male thread formed on the outer circumference of the rotation shaft 6. Thus; the inner race 50 is forced against the side of the first inner race fixing ring 53A which is in contact with the first stepped portion 6A by the fastening force of the fixing nut 54 transmitted to the inner race 50 via the second inner race fixing ring 53B, so that the position of the inner race 50 is restricted in the axial direction. Also, instead of the fastening force by the fixing nut 54, the fastening force by a shrink disc may be utilized for restricting the position of the inner race 50 in the axial direction, for instance.

On the other hand, the outer race 51 of the first bearing 20 is sandwiched between: a projection 21A which projects inward in the radial direction from the bearing housing 21 along the outer circumferential surface of the rotation shaft 6; and an outer race fixing plate 55 attached to the bearing housing 21, so that the position of the outer race 51 is restricted in the axial direction.

In the bearing housing 21 of the first bearing 20, an inner flow path 24 is provided for supplying a lubricant oil to a rolling contact surface between the roller 52 and the inner race 50 or the outer race 51 of the first bearing 20. The inner flow path 24 runs through the outer race 51 and communicates with the annular space (where the roller 52 is disposed) between the inner race 50 and the outer race 51. The annular space is filled with the lubricant oil supplied via the inner flow path 24.

In some embodiment, for the purpose of preventing leakage of the lubricant oil from the annular space between the inner race 50 and the outer race 51, a seal ring (56A, 56B) is provided. In the exemplary embodiment shown in Fig. 5, a seal ring 56A, and a spacer ring 57A adjacent to the seal ring 56A are inserted and held between the bearing housing 21 and the seal fixing plate 58A attached to the bearing housing 21. On the other hand, a seal ring 56B, and a spacer ring 57B adjacent to the seal ring 56B are inserted and held between an outer race fixing plate 55 and a seal fixing plate 58B attached to the outer race fixing plate 55.

Herein, the spacer ring (57A, 57B) is provided for the purpose of recovering the sealability in a case where the inner race fixing ring (53A, 53B) has become worn by the contact with the seal ring (56A, 56B). That is, when the inner race fixing ring (53A, 53B) has become worn and the sealability has decreased, the positions of the seal ring (56A, 56B) and the spacer ring (57A, 57B) are reversed so that the seal ring (56A, 56B) contacts the inner race fixing ring (53A, 53B) at a different position, which enables recovering the sealability.

In some embodiment, as shown in Fig. 6, the second bearing 22 includes an inner race 60 fit onto the outer circumference of the rotation shaft 6, an outer race 61 fit onto the inner circumference of the bearing housing 23, and a roller 62 provided between the inner race 60 and the outer race 61. All of the inner race 60, the outer race 61, and the bearing housing 23 have a seamless annular shape continuous in the circumferential direction, which is a so-called seamless structure.

In the exemplary embodiment shown in Fig. 6, the second bearing 22 is a taper roller bearing where the roller 62 is a tapered roller. The taper roller bearing is designed to receive the axial load (thrust load) and thus is a "thrust bearing".

Further, in the exemplary embodiment shown in Fig. 6, at both sides of the inner race 60 of the second bearing 22, a pair of inner race fixing rings (63A, 63B) is provided, respectively. That is, the inner race 60 is disposed so as to be sandwiched between a third inner race fixing ring 63A positioned on the side closer to the hub 4 and a fourth inner race fixing ring 63B positioned on the side farther from the hub 4.

The third inner race fixing ring 63A is fit onto the rotation shaft 6 so as to contact the second stepped portion 6B provided for the rotation shaft 6. Also, on the opposite side of the inner race 60 across the fourth inner race fixing ring 63B, a fixing nut 64 is disposed, the fixing nut 64 having a female thread which is configured to be screwed to a male thread formed on the outer circumference of the rotation shaft 6. Thus, the inner race 60 is forced against the side of the third inner race fixing ring 63A which is in contact with the second stepped portion 6B by the fastening force of the fixing nut 64 transmitted to the inner race 60 via the fourth inner race fixing ring 63B, so that the position of the inner race 60 is restricted in the axial direction. Also, instead of the fastening force by the fixing nut 64, the fastening force by a shrink disc may be utilized for restricting the position of the inner race 60 in the axial direction, for instance.

On the other hand, the outer race 61 of the second bearing 22 is sandwiched between: a projection 23A which projects inward in the radial direction from the bearing housing 23 along the outer circumferential surface of the rotation shaft 6; and an outer race fixing plate 65 attached to the bearing housing 23, so that the position of the outer race 61 is restricted in the axial direction. The outer race 61 may be composed of a pair of annular pieces (61A, 61B) each of which has a cross section of a trapezoidal shape and an intermediate piece 61C provided between the annular pieces 61A, 61B.

In the bearing housing 23 of the second bearing 22, an inner flow path 26 is provided for supplying a lubricant oil to a rolling contact surface between the roller 62 and the inner race 60 or the outer race 61 of the second bearing 22. The inner flow path 26 runs through the outer race 61 and communicates with the annular space (where the roller 62 is disposed) between the inner race 60 and the outer race 61. The annular space is filled with the lubricant oil supplied via the inner flow path 26

In some embodiment, for the purpose of preventing leakage of the lubricant oil from the annular space between the inner race 60 and the outer race 61, a seal ring (66A, 66B) is provided. In the exemplary embodiment shown in Fig. 6, a seal ring 66A and a spacer ring 67A are inserted and held between the bearing housing 23 and the seal fixing plate 68A attached to the bearing housing 23. On the other hand, a seal ring 66B and a spacer ring 67B are inserted and held between an outer race fixing plate 65 and a seal fixing plate 68B attached to the outer race fixing plate 55.

Herein, the spacer ring (67A, 67B) is provided for the purpose of recovering the sealability in a case where the inner race fixing ring (63A, 63B) has become worn by the contact with the seal ring (66A, 66B). That is, when the inner race fixing ring (63A, 63B) has become worn and the sealability has decreased, the positions of the seal ring (66A, 66B) and the spacer ring (67A, 67B) are reversed so that the seal ring (66A, 66B) contacts the inner race fixing ring (63A, 56B) at a different position, which enables recovering the sealability.

Hereinafter, the installation method of the shafting according to the embodiment will be described in detail.

The installation method of the shafting according to some embodiment includes:
a bearing mounting step of mounting the first bearing 20 and the second bearing 22 to the rotation shaft 6; a bearing connection step of connecting the first bearing 20 and the second bearing 22 by a connection member 70; and a rotation shaft mounting step of mounting the rotation shaft 6 onto the nacelle base plate 30A. An example described below is a case where the bearing mounting step and the bearing connection step are performed at the same time by mounting the connection member 70 to the rotation shaft along with the first bearing 20 and the second bearing 22.

In the bearing mounting step and the bearing connection step, when assembling the above shafting, the first bearing 20 and the second bearing 22 are mounted to the rotation shaft 6 in a state where the rotation shaft 6 is placed standing upright in the vertical direction. The outline of the bearing mounting step and the bearing connection step according to some embodiment will be described as follows.

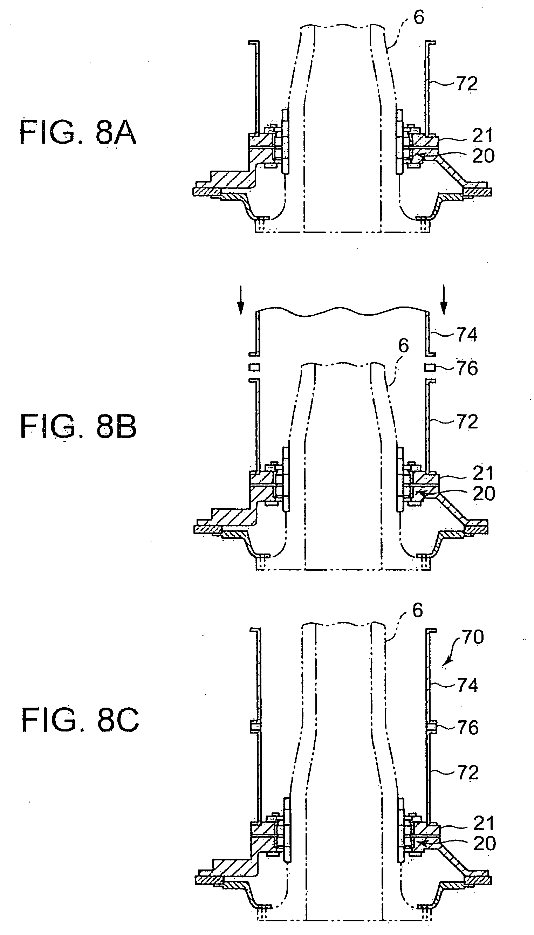

The first bearing ("the first bearing" described herein represents not only the first bearing 20 but the bearing unit as a whole including the bearing housing 21) is moved relative to the rotation shaft 6 to a first mounting position so that the rotation shaft 6 standing upright is inserted into the first bearing. Then, in the state where the first bearing is supported from below and held at the first mounting position, the first bearing is mounted to the rotation shaft 6. Further, in the state where the first bearing is held at the first mounting position, a lower end of a spacer (for instance, a connection member 70 shown in Figs. 8A to 8C) is fixed to the first bearing so that the spacer extends upward from the first bearing. Subsequently, the second bearing ("the second bearing" described herein represents not only the second bearing 22 but the bearing unit as a whole including the bearing housing 23) is moved relative to the rotation shaft 6 to a second mounting position so that the rotation shaft 6 standing upright is inserted into the second bearing and the second bearing contacts an upper end of the spacer. After this, the second bearing is fixed to the upper end of the spacer. Finally, in the state where the second bearing is fixed to the upper end of the spacer, the second bearing is mounted to the rotation shaft 6 at the second mounting position.

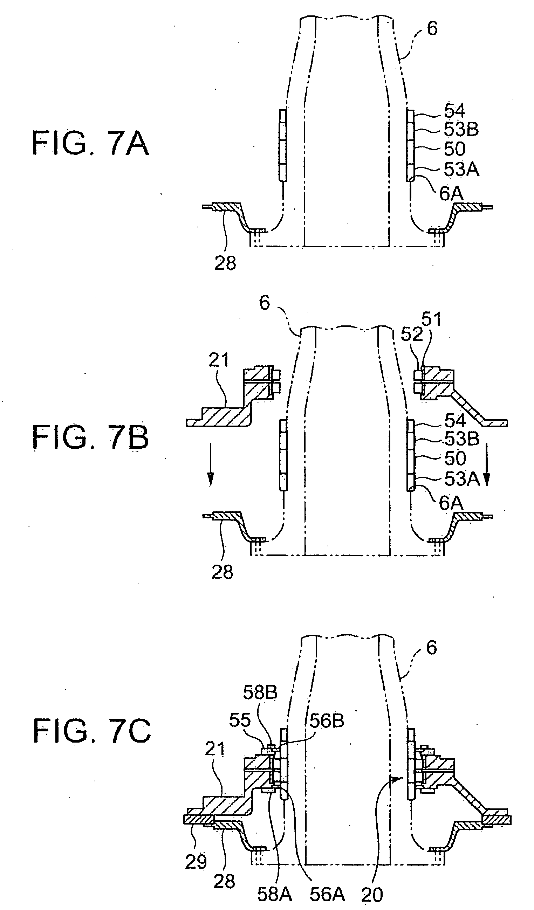

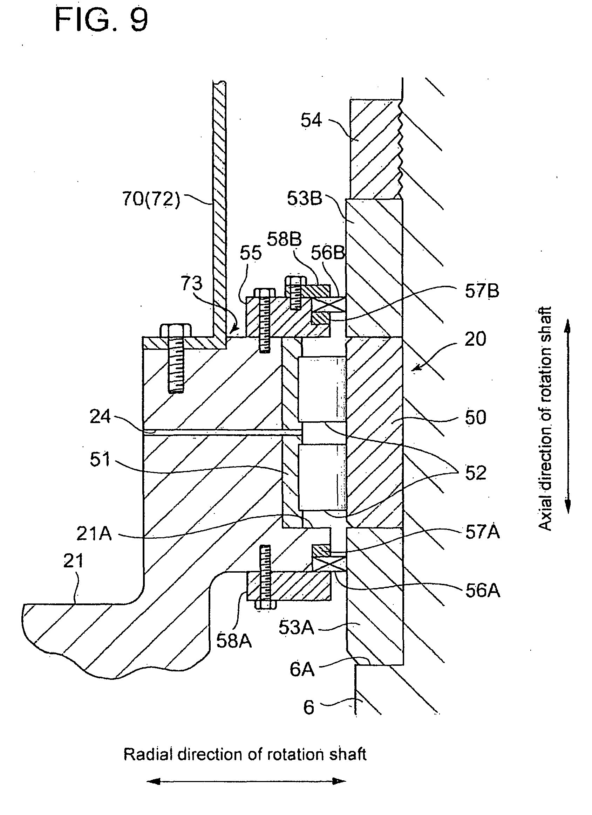

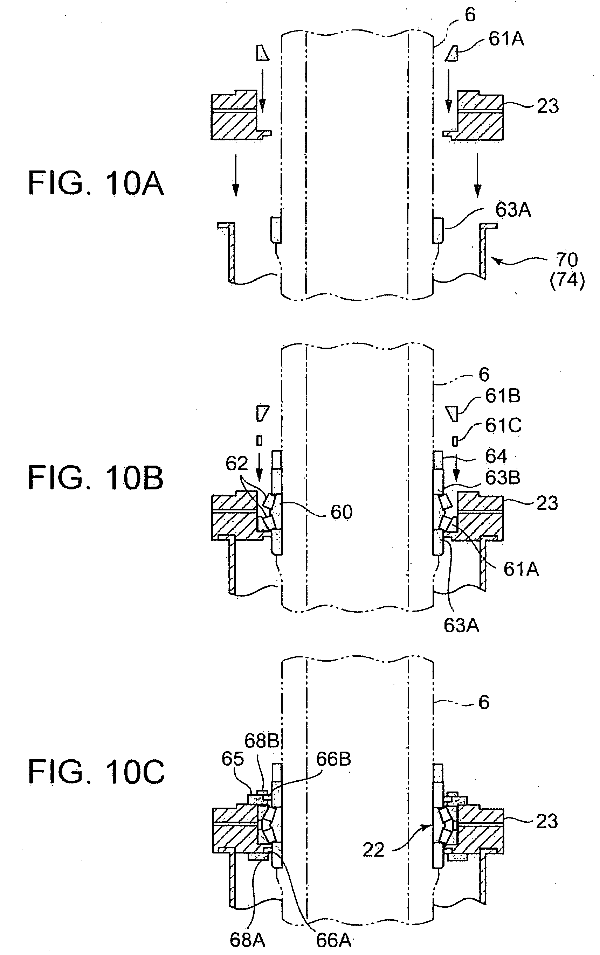

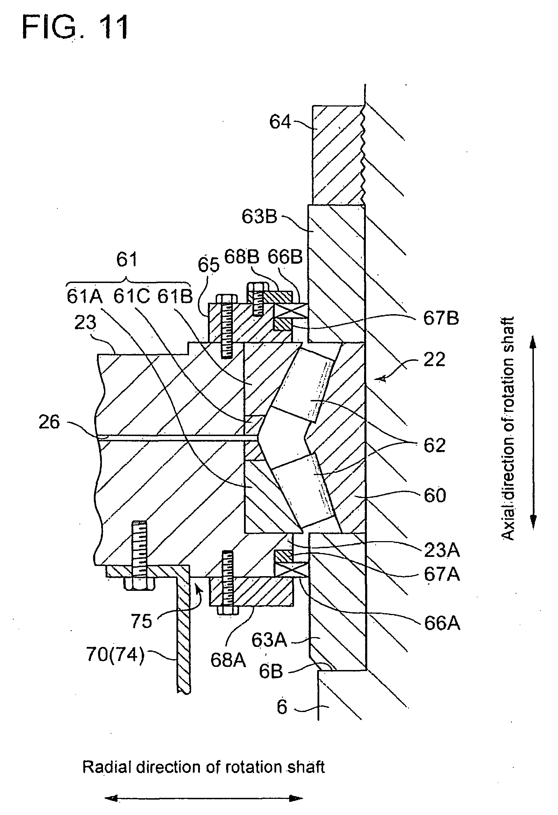

Figs. 7A to 7C are illustrations of the steps of mounting the first bearing 20 to the rotation shaft 6 according to one embodiment. Figs. 8A to 8C are illustrations of the steps of fixing the connection member 70 to the first bearing 20 according to one embodiment. Fig. 9 is an illustration of a socket-and-spigot joint between the connection member 70 and the first bearing 20. Figs. 10A to 10C are illustrations of the steps of mounting the second bearing 22 to the rotation shaft 6 according to one embodiment. Fig. 11 is an illustration of a socket-and-spigot joint between the connection member 70 and the second bearing 22.

First, as shown in Fig. 7A, in the state where the rotation shaft 6 is stood upright, the inner race 50 of the first bearing 20 is fit onto the outer circumference of the rotation shaft 6. In some embodiment, the first inner race fixing ring 53A, the inner race 50, and the second inner race fixing ring 53B are fit around the rotation shaft 6 in this order, and then the fixing nut 54 is screwed to a male thread formed on the outer circumferential surface of the rotation shaft 6.

Specifically, firstly, the first inner race fixing ring 53A is fit onto the outer circumference of the rotation shaft 6 so as to contact the first stepped portion 6A provided for the outer circumferential surface of the rotation shaft 6. After this, the inner race 50 is fit onto the outer circumference of the rotation shaft 6 so as to contact the inner race fixing ring 53A. Then, the second inner race fixing ring 53B is fit onto the outer circumference of the rotation shaft 6 so as to contact the inner race 50 from the opposite side of the first inner race fixing ring 53A across the inner race 50. Finally, the fixing nut 54 is screwed to a male thread of the rotation shaft 6 so as to contact the second inner race fixing ring 53B from the opposite side of the inner race 50 across the second inner race fixing ring 53B. Herein, each of the inner race 50, the inner race fixing rings (53A, 53B) and the fixing nut 54 is moved to the respective attachment position by being lowered from the upper end toward the lower end of the rotation shaft 6 which is in the state of standing upright.

Next, as shown in Fig. 7B, a first bearing component assembly where the outer race 51 and the roller 52 are attached to the bearing housing 21 of the first bearing 20 is moved to the mounting position of the first bearing 20 to the rotation shaft 6 (the first mounting position) by being lowered along the rotation shaft 6 in the state of standing upright.

Then, as shown in Fig. 7C, the first bearing component assembly of the first bearing 20 (an assembly composed of the bearing housing 21, the outer race 51 and the roller 52) is held at the first mounting position by being supported from below. At the first mounting position, the outer race 51 of the first bearing component assembly is facing the inner race 50 fit onto the outer circumference of the rotation shaft 6. In some embodiment, in the state where the first bearing component assembly is held at the first mounting position, the outer race fixing plate 55, the seal ring (56A, 56B), the spacer ring (57A, 57B) and the seal fixing plate (58A, 58B) are attached to the first bearing component assembly. Accordingly, the mounting of the first bearing 20 to the rotation shaft 6 is completed.

As the first bearing 20 is a thrust free bearing, the first bearing 20 is continuously held at the first mounting position by being supported from below until the mounting of the second bearing 22 to the rotation shaft 6 is completed and the rotation shaft 6 is returned to the substantially horizontal position.

Also, in some embodiment, as shown in Fig. 7C, upon holding the first bearing component assembly at the first mounting position, the bearing housing 21 is supported from below via a brake disc 28. Herein, the holding position where the first bearing component assembly is held may be adjusted by inserting an annular plate 29 between the brake disc 28 and the bearing housing 21, the annular plate 29 having a thickness which has been adjusted in advance.

Next, the lower end of the connection member 70 is fixed to the first bearing 20 which is mounted to the rotation shaft 6 so that the connection member 70 extends upward from the first bearing 20.

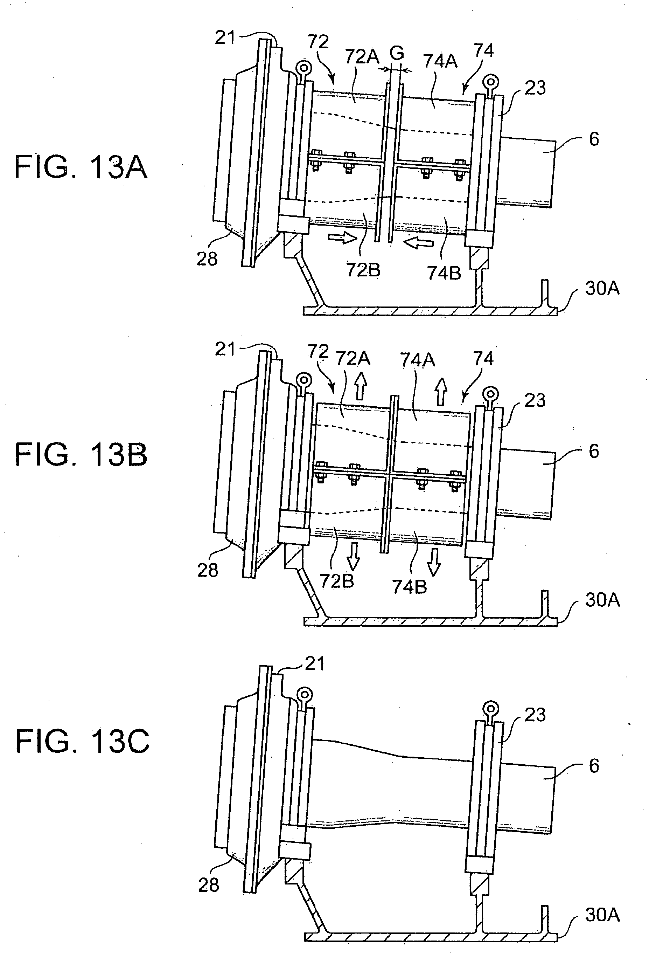

In some embodiment, as shown in Fig. 8C, the connection member 70 includes a first cylinder 72 positioned on the first bearing 20 side, a second cylinder 74 positioned on the second bearing 22 side, and an annular member 76 provided between the first cylinder 72 and the second cylinder 74. In this case, as shown in Figs. 8A to 8C, the first cylinder 72 is attached to the bearing housing 21 of the first bearing 20 held at the first mounting position by being supported from below, and then the annular member 76 and the second cylinder 74 are connected to the first cylinder 72. Herein, the connection member 70 is composed of the first cylinder 72, the second cylinder 74 and the annular member 76 for the purpose of easily performing removal of the connection member 70 as described below in reference to Figs. 13A to 13C.

In one embodiment, as shown in Fig. 9, upon fixing the lower end of the connection member 70 (the first cylinder 72) to the first bearing 20, the lower end of the spacer 70 (the first cylinder 72) and the bearing housing 21 of the first bearing 20 are fit together at a socket-and-spigot joint 73. That is, a circular projection or recess formed on the lower end of the connection member70 (the first cylinder 72) is fit into a circular recess or projection formed on the bearing housing 21. As a result, the position of the first bearing 20 is determined with respect to the connection member 70 in the radial direction of the rotation shaft 6.

Subsequently, as shown in Fig. 10A, in the state where the rotation shaft 6 is stood upright, the bearing housing 23 of the second bearing 22 is moved downward along the rotation shaft 6 and fixed to the upper end of the connection member 70 (the second cylinder 74). As a result, the mounting position of the bearing housing 23 of the second bearing 22 to the rotation shaft 6 in the axial direction is determined at the second mounting position. That is, the length of the connection member 70 is set so that the mounting position of the second bearing 22 to the rotation shaft 6 in the axial direction is determined at the second mounting position. Accordingly, the second bearing 22 is mounted to the rotation shaft 6 at the second mounting position which is away by a distance corresponding to the length of the connection member 70 from the first mounting position where the first bearing 20 is held.

Among the inner race fixing rings (63A, 63B), the third inner race fixing ring 63A positioned at the hub 4 side is fit in advance onto the outer circumference of the rotation shaft 6 so as to contact the stepped portion 6B provided on the outer circumferential surface of the rotation shaft 6. Also, among the pair of annular pieces (61A, 61B), a first piece 61A positioned at the first bearing 20 side is fit onto the inner circumference of the bearing housing 23.

In one embodiment, as shown in Fig. 11, upon fixing the bearing housing 23 of the second bearing 22 to the upper end of the connection member 70 (the second cylinder 74), the upper end of the connection member 70 (the second cylinder 74) and the bearing housing 23 of the first bearing 22 are fit together at a socket-and-spigot joint 75. That is, a circular projection or recess formed on the upper end of the spacer 70 (the second cylinder 74) is fit into a circular projection or recess formed on the bearing housing 23. As a result, the position of the second bearing 22 is determined with respect to the connection member 70 in the radial direction of the rotation shaft 6.

As described above, by determining the position of each of the first bearing 20 and the second bearing 22 in the radial direction with respect to the connection member 70 by the socket-and-spigot joint (73, 75) to the connection member 70, it is possible to perform alignment of centers of the first bearing 20 and the second bearing 22.

Further, as shown in Fig. 10B, a second bearing component assembly composed of the inner race 60 and the roller 62 is fit onto the outer circumference of the rotation shaft 6 at the second mounting position, and the intermediate piece 61C is fit onto the bearing housing 23. After this, among the annular pieces (61A, 61B), a second piece 61B positioned at the farther side from the first bearing 20 is fit onto the bearing housing 23. As a result, a bearing 22 can be obtained where the roller 62 is provided between the inner race 60 and the outer race 61.

Also, for restricting the position of the inner race 60 in the axial direction, the fourth inner race fixing rig 63B positioned on the side farther from the hub 4 among the inner race fixing rings (63A, 63B) is fit onto the outer circumference of the rotation shaft 6, and the fixing nut 64 is screwed to a male thread formed on the outer circumferential surface of the rotation shaft 6.

Then, the outer race fixing plate 65, the seal ring (66A, 66B), the spacer ring (67A, 67B), and the seal fixing plate (68A, 68B) are attached to the bearing housing 23.

Accordingly, as shown in Fig. 10C, the mounting of the second bearing 22 to the rotation shaft 6 at the second mounting position is completed. After this, the rotation shaft 6 to which the first bearing 20 and the second bearing 22 are mounted is returned to the substantially horizontal position. Herein, as the second bearing 22 is designed to receive the thrust load, it is not necessary to support the first bearing 20 from below after mounting the second bearing 22 to the rotation shaft 6.

Next, the method of mounting the rotation shaft 6 to which the first bearing 20 and the second bearing 22 have been attached to the rotation shaft 6onto the nacelle 30 will be described.

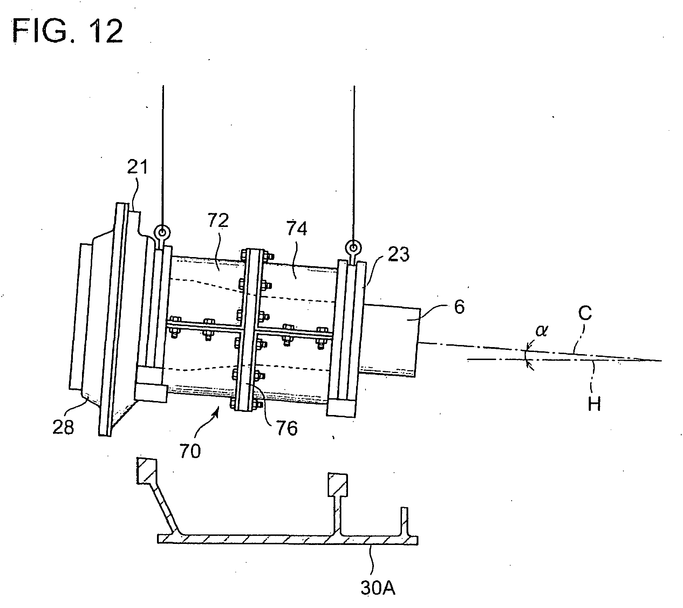

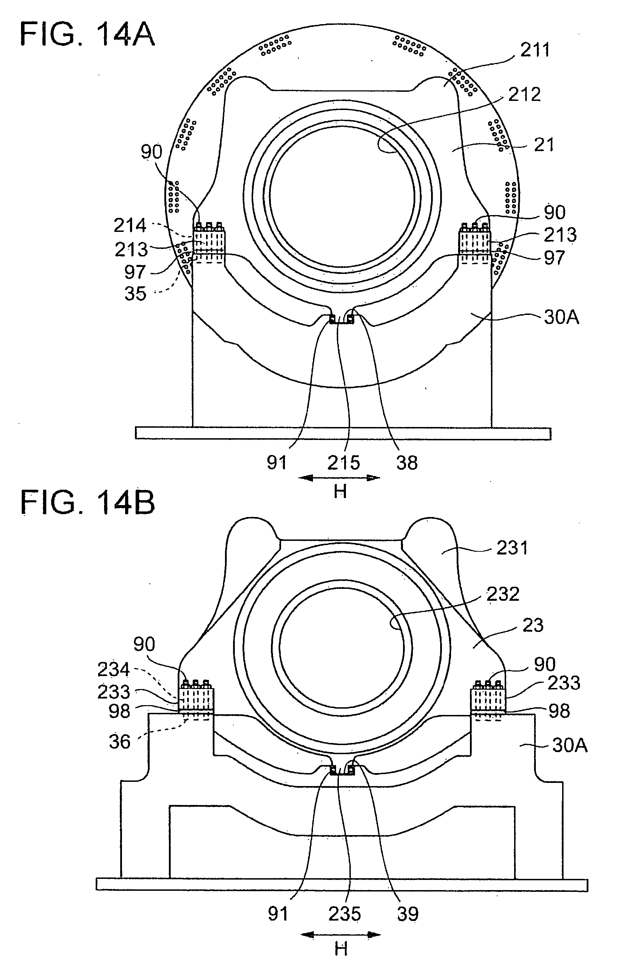

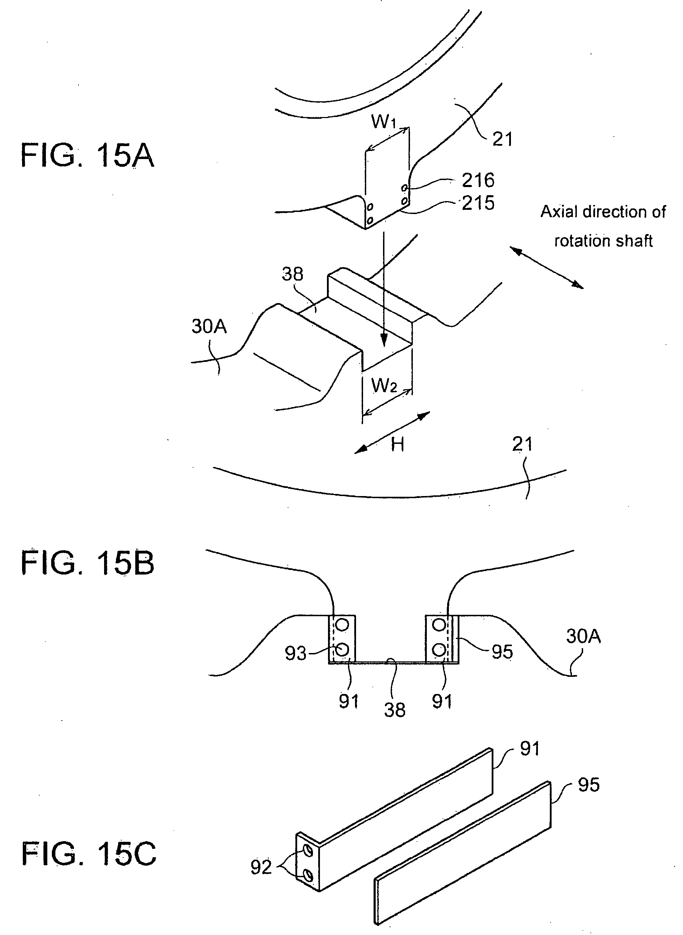

Fig. 12 is an illustration of installation of the rotation shaft to the nacelle, where the first bearing and the second bearing are mounted to the rotation shaft. Figs. 13A to 13C are illustrations of the steps of removing the spacer from a pair of bearing housings. Fig. 14A is an illustration of the first bearing as seen from the rear side in the axial direction of the rotation shaft. Fig. 14B is an illustration of the second bearing as seen from the rear side in the axial direction of the rotation shaft. Fig. 15A is an oblique perspective view of a fitting joint between the bearing housing and the nacelle base plate. Fig. 15B is a front view of a fitting joint between the bearing housing and the nacelle base plate. Fig. 15C is an oblique perspective view of an exemplary configuration of a liner and a shim.

In some embodiment, along with the first bearing and the second bearing ("the first bearing" and "the second bearing" herein do not only represent the first bearing 20 and the second bearing 22 but also the bearing units as a whole including the bearing housings 21, 23) connected to each other by the connection member 70, the rotation shaft 6 is mounted onto the nacelle base plate 30A. At this time, as shown in Fig. 12, in the state where the bearing housings 21, 23 are connected to each other by the connection member 70, the rotation shaft 6 is lifted up by a lift along with the first bearing and the second bearing, and moved to above the nacelle base plate 30A. Then, the bearing housings 21, 23 are placed to the nacelle base plate 30A.

Upon lifting the rotation shaft 6 up using a lift, an angle corresponding to a tilt angle "a" is formed between the center line C of the rotation shaft 6 and the horizontal line H. Thus, the component force in the axial direction of the rotation shaft 6 corresponding to the tilt angle "α" acts on the first bearing (thrust free bearing) 20, which raises the possibility that the first bearing 20 moves or get damaged. In this regard, by lifting up the rotation shaft 6 in a state where the first bearing 20 and the second bearing 22 are connected to each other by the connection member 70 as described above, it is possible to prevent misalignment of or damage to the first bearing 20.

In one embodiment, as shown in Figs. 13A to 13C, after placing the rotation shaft 6 onto the nacelle base plate 30A, the connection member 70 which has been connecting the bearing housing 21 of the first bearing 20 and the bearing housing 23 of the second bearing 22 is removed.

Specifically, as shown in Fig. 13A, an annular member 76 provided between the first cylinder 72 and the second cylinder 74 is removed and then the first cylinder 72 and the second cylinder 74 are moved along the rotation shaft 6 in the directions (see the arrows in the drawing) away from the first bearing 20 and the second bearing 22, respectively. As a result, the socket-and-spigot joint 73 (see Fig. 9) between the first cylinder 72 and the bearing housing 21 and the socket-and-spigot joint 75 (see Fig. 11) between the second cylinder 74 and the bearing housing 23 are disconnected. After this, as shown in Fig. 13B, a pair of half shells 72A, 72B forming the first cylinder 72 is separated from each other, and a pair of half shells 74A, 74B forming the second cylinder 74 is separated from each other. As a result, as shown in Fig. 13C, the rotation shaft 6 which has been covered by the connection member 70 is exposed.

Herein, the space G (which corresponds to the thickness of the annular member 76) formed between the first cylinder 72 and the second cylinder 74 by removing the annular member 76 is set to be large enough to disconnect the socket-and-spigot joint 73, 75.

In another embodiment, as shown in Figs. 14A and 14B, after removing the connection member 70, the bearing housing 21 of the first bearing 20 and the bearing housing 23 of the second bearing 23 may be fixed to the nacelle base plate 30A after adjusting the positions in the horizontal direction. Herein, the horizontal direction is the horizontal direction H perpendicular to the axis of the rotation shaft 6.

As shown in Fig 14A, the bearing housing 21 includes a body part 211 in which the first bearing 20 is housed, a shaft hole 212 into which the rotation shaft 6 is inserted, and a pair of attachment parts 213, 213 provided at the both sides of the shaft hole 212 respectively. A bolt hole 214 is provided for each of the attachment parts 213, 213. Also, for the bearing housing 21, a projection 215 is provided extending in the axial direction of the rotation shaft 6, that is, the axial direction of the shaft hole 212. The projection 215 is positioned at a region facing the nacelle base plate 30A. In the drawing, a case where the projection 215 is provided at the lower part of the shaft hole 212 is illustrated as an example.

For the nacelle base plate 30A, a bolt hole 35 is provided for a region corresponding to the bolt hole 214 of the bearing housing 21. Also, for the nacelle base plate 30A, a recess 38 extending in the axial direction of the rotation shaft 6 is provided at a region corresponding to the projection 215 of the bearing housing 21.

As shown in Fig. 15A, the width W₂ of the recess 38 on the nacelle base plate 30A is formed larger than the width W₁ of the projection 215 of the bearing housing 21 so that it is possible to adjust the position in the horizontal direction H of the bearing housing 21.

Upon adjusting the position in the horizontal direction H of the bearing housing 21 of the first bearing 20, as shown in Fig. 15B, after placing the bearing housing 21 onto the nacelle base plate 30A so that the projection 215 is fit into the recess 38, a liner 91 which extends in the substantially vertical direction is inserted between the projection 215 and the recess 38. By selecting an appropriate thickness of the liner 91 to be inserted, it is possible to adjust the position in the horizontal direction of the bearing housing 21 of the first bearing 20. At this time, in addition to the liner 91, a shim 95 may be inserted between the projection 215 and the recess 38, the shim 95 being thinner than the liner 91. It is possible to adjust the position in the horizontal direction of the bearing housing 21 by inserting a plurality of shims 95. For instance, as shown in Fig. 15C, the liner may have an L-shape and a side face where a bolt hole 92 is provided. The shim 95 may have a flat plate shape. As shown in Fig. 15B, after inserting the liner between the projection 215 and the recess 38, the liner 91 may be fixed to the nacelle base plate 30A by inserting the a bolt 93 into the bolt hole 92 and a bolt hole 216 (see Fig. 15A) formed on the nacelle base plate 30A.

As shown in Fig. 14B, the bearing housing 23 includes a body part 231 in which the first bearing 22 is housed, a shaft hole 232 into which the rotation shaft 6 is inserted, and a pair of attachment parts 233, 233 provided at the both sides of the shaft hole 232 respectively. A bolt hole 234 is provided for each of the pair of attachment parts 233, 233. Also, for the bearing housing 23, a projection 235 is provided extending in the axial direction of the rotation shaft 6. For the nacelle base plate 30A, a bolt hole 36 is provided for a region corresponding to the bolt hole 234 of the bearing housing 23. Also, for the nacelle base plate 30A, a recess 39 extending in the axial direction of the rotation shaft 6 is provided at a region corresponding to the projection 235 of the bearing housing 23.

Similarly to the bearing housing 21 of the first bearing 20, after placing the bearing housing 23 onto the nacelle base plate 30A so that the projection 235 is fit into the recess 39, a liner 91 is inserted between the projection 235 and the recess 39, thereby adjusting the relative position in the horizontal direction of the nacelle base plate 30A and the bearing housing 23 of the second bearing 22. At this time, in addition to the liner 91, a shim 95 (see Fig. 15C) may be inserted between the projection 235 and the recess 39, the shim 95 being thinner than the liner 91.

While Figs. 14A to 15C illustrate a case where the projection 215, 235 is provided for said each bearing 21, 23 and the recess 38, 39 is provided for the nacelle base plate 30A, a recess may be provided for said each bearing 21, 23 and a projection may be provided for the nacelle base plate 30A.

Then, after adjusting the position in the horizontal direction of said each bearing 21, 23, as shown in Figs. 14A and 14B, said each bearing 21, 23 is fixed to the nacelle base plate 30A by the bolt 90, the bolt hole 214, 234 and the bolt hole 35, 36.

As the projection 215, 235 formed on one of said each bearing 21, 23 or the nacelle base plate 30A is fit into the recess 38, 39 formed on the other, it is possible to realize the fixing in the horizontal direction H with a simple configuration. Also, as the relative position between said each bearing 21, 23 and the nacelle base plate 30A is adjusted by inserting the liner 91 between the projection 215, 235 and the recess 38, 39, it is possible to fix said each bearing 21, 23 in the state of being positioned with high accuracy by using the liner 91 of an appropriate thickness.

In another embodiment, after adjusting the position in the horizontal direction of said each bearing 21, 23, a shear pin may be used for fixing said each bearing 21, 23 to the nacelle base plate 30A.

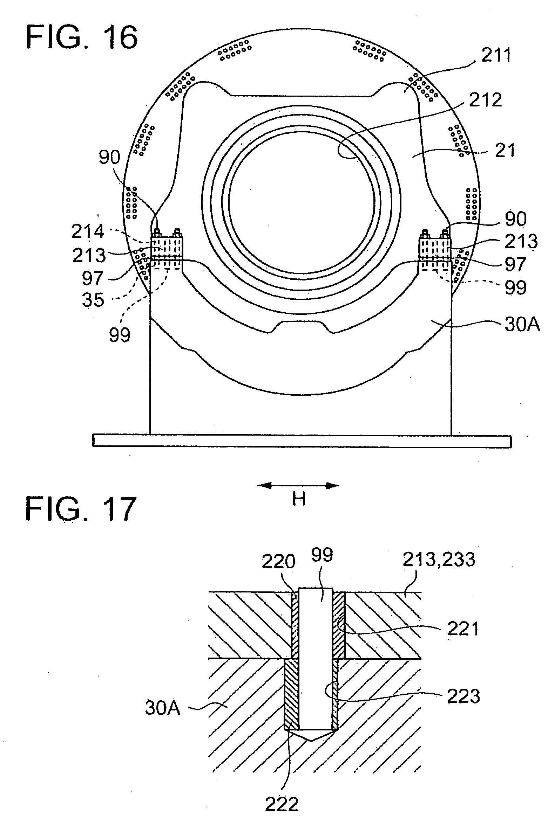

Fig. 16 is an illustration of a configuration for positioning the bearing housing using a shear pin. Fig. 17 is a cross section of an area around the shear pin.

As shown in Fig. 16, the bearing housing 21 whose position in the horizontal direction has been adjusted is positioned with respect to the horizontal direction by a pair of shear pins 99 provided for both sides of the shaft hole 212 respectively. Similarly, the bearing housing 23 is positioned with respect to the horizontal direction by a pair of shear pins 99 provided for both sides of the shaft hole 232 respectively.

Also, as a result of adjusting the position in the horizontal direction of the bearing 21, 23, the position of a pin hole 221 provided for the attachment part 213, 233 of the bearing housing 21, 23 and the position of a pin hole 223 provided for the nacelle base plate 30A may be misaligned. In this case, an eccentric sleeve 220, 222 may be fit into the respective pin hole 221, 223 so as to align the position of the hole of said each eccentric sleeve 220, 222, and then the shear pin 99 may be inserted into this hole.

Also, in one embodiment, as shown in Figs. 14A and 14B, by inserting a shim 97, 98 extending in the substantially horizontal direction between the nacelle base plate 30A and each of the bearing housing 21 of the first bearing 20 or the bearing housing 23 of the second bearing 22, the height of the first bearing 20 and the second bearing 22 with respect to the nacelle base plate 30A may be adjusted. As a result, it is possible to position the first bearing 20 and the second bearing 22 accurately with respect to the height direction.

In another embodiment, the connection member 70 remains after the rotation shaft 6 is mounted to the nacelle base plate 30A, the connection member 70 being used as a connection member between the first bearing 20 and the second bearing 22 during operation of the wind turbine generator 1. In this case, instead of the configuration including the first cylinder 72, the second cylinder 74, and the annular member 76, the connection member 40 shown in Figs. 3 and 4 may be used as the connection member 70.

As described above, as the first bearing 20 and the second bearing 22 are maintained substantially concentric with each other by the connection member 70 upon mounting the rotation shaft 6 onto the nacelle base plate 30A according to the above embodiment, it is possible to perform the position determination for the first bearing 20 and the second bearing 22 with high accuracy.

Also, as the bearing housing 21 of the first bearing 20 and the bearing housing 23 of the second bearing 22 are configured separately from each other and connected by the connection member 70, it is possible to manufacture each of the bearing housings with high quality and accuracy.

Embodiments of the present invention were described in detail above, but the present invention is not limited thereto, and various amendments and modifications may be implemented within a scope of the present invention.

For instance, while the bearing housing 21 of the first bearing 20 and the bearing housing 23 of the second bearing 22 are connected by the connection member 40, the bearings 21, 23 may be connected by a connection frame instead of the connection member 40, or in addition to the connection member 40.

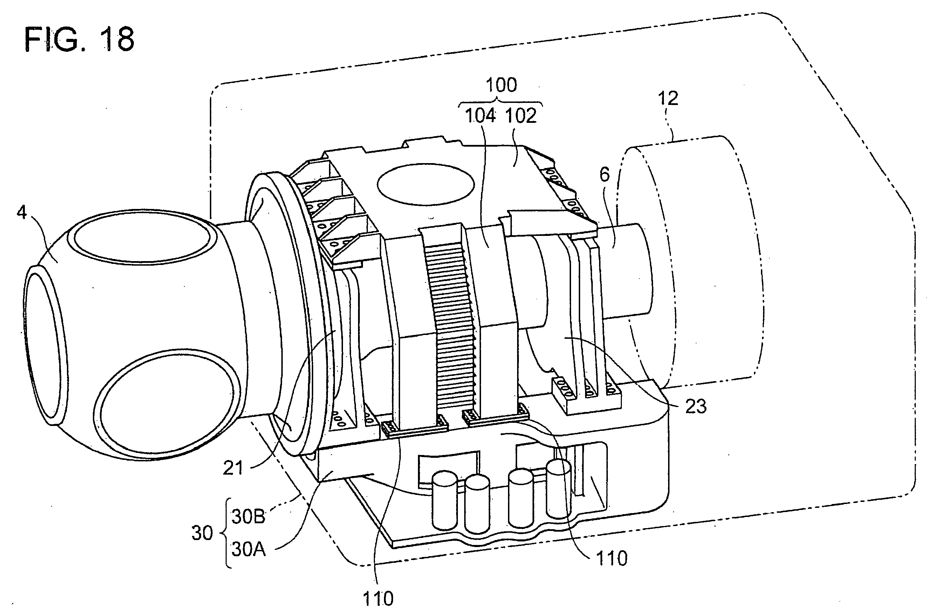

Fig. 18 is an oblique perspective view of an interior structure of a nacelle of a wind turbine generator including a connection frame provided between a pair of bearing housings 21, 23. As shown in the drawing, the connection frame 100 may include: a connection plate 102 which is provided above the rotation shaft 6 to connect the upper parts of the bearing housings 21, 23 with each other; and a pair of leg parts 104 which supports the connection plate 102 to the nacelle base plate 30A at both sides of the rotation shaft 6. As a result, it is possible to contribute to maintaining the bearings 20, 22 concentric by connecting the upper parts of the bearing housings 21, 23 with each other using the connection plate 102.

Also, the height of the connection frame 100 with respect to the nacelle base plate 30A may be adjusted by inserting a shim 110 between each of the leg parts 104 and the nacelle base plate 30A. Upon adjusting the height, the height of each of the bearings 21, 23 is adjusted by inserting a shim 110 of an appropriate thickness or by inserting a plurality of shims 110 forming an appropriate thickness so that the concentricity between the first bearing 20 and the second bearing 22 is secured. As a result, it is possible to appropriately adjust the height of the connection frame 100 in accordance with the height of the bearing housing 21, 23 of said each bearing 20, 21.

### REFERENCE SIGNS LIST

- 1: Wind turbine generator
- 2: Blade
- 3: Rotor
- 4: Hub
- 5: Hub cover
- 6: Rotation shaft
- 6A: First stepped portion
- 6B: Second stepped portion
- 8: Tower
- 10: Drive train
- 12: Hydraulic pump
- 13: High pressure oil line
- 14: Hydraulic motor
- 15: Low pressure oil line
- 16: Generator
- 20: First bearing
- 21: Bearing housing
- 22: Second bearing
- 23: Bearing housing
- 24: Inner flow path
- 26: Inner flow path
- 27: Brake caliper
- 28: Brake disc
- 30: Nacelle
- 30A: Nacelle base plate
- 30B: Nacelle cover
- 30C: Nacelle frame
- 38, 39: Recess
- 40: Connection member
- 42: Cutout
- 46: Equipment placement table
- 50: Inner race
- 51: Outer race
- 52: Roller
- 53A: First inner race fixing ring
- 53B: Second inner race fixing ring
- 54: Fixing nut
- 55: Outer race fixing plate
- 56A, 56B: Seal ring
- 57A, 57B: Spacer ring
- 58A, 58B: Seal fixing plate
- 60: Inner race
- 61: Outer race
- 62: Roller
- 63A: Third inner race fixing ring
- 63B: Fourth inner race fixing ring
- 64: Fixing ring
- 65: Outer race fixing plate
- 66A, 66B: Seal ring
- 67A, 67B: Spacer ring
- 68A, 68B: Seal fixing ring
- 70: Connection member
- 72: First cylinder
- 73: Socket-and-spigot joint
- 74: Second cylinder
- 75: Socket-and-spigot joint
- 76: Annular member
- 80: Connection frame
- 82: Connection plate
- 84: Supporting part
- 90, 93: Bolt
- 95, 96, 97, 98: Shim
- 99: Eccentric pin
- 100: Connection frame
- 102: Connection plate
- 211, 231: Body part
- 212, 232: Shaft hole
- 213, 233: Attachment part
- 214, 234: Bolt hole
- 215, 235: Projection
- 216, 236: Bolt hole

## Claims

1. An installation method for a shafting of a power generating apparatus of a renewable energy type, the power generating apparatus of a renewable energy type including:
at least one blade (2);
a hub (4) to which the at least one blade (2) is attached;
a rotation shaft (6) coupled to the hub (4);
a first bearing (20) and a second bearing (22) which support the rotation shaft (6); and
a nacelle (30) including a nacelle base plate (30A) which supports each of the bearings from below, the method comprising:
a step of mounting the first bearing (20) and the second bearing (22) to the rotation shaft (6);
a step of connecting a bearing housing (21) of the first bearing (20) and a bearing housing (23) of the second bearing (22) by a connection member (40) so that the first bearing (20) and the second bearing (22) are concentric with each other; and
a step of mounting the rotation shaft (6) onto the nacelle base plate (30A) along with the first bearing (20) and the second bearing (22) in a state where the first bearing (20) and the second bearing (22) are maintained concentric with each other.

2. The installation method for a shafting of a power generating apparatus of a renewable energy type according to claim 1, wherein
in the step of connecting by the connection member (40), each of the bearing housing (21) of the first bearing (20) and the bearing housing (23) of the second bearing (22) is positioned with respect to the connection member (40) in a radial direction of the rotation shaft (6) by socket-and-spigot joint (75) fitting.

3. The installation method for a shafting of a power generating apparatus of a renewable energy type according to claim 1, wherein
in the step of mounting the first bearing (20) and the second bearing (22), the rotation shaft (6) is inserted in sequence into the first bearing (20) and the second bearing (22) each of which has a seamless annular shape in a state where the rotation shaft (6) stands upright along the vertical direction.

4. The installation method for a shafting of a power generating apparatus of a renewable energy type according to claim 1, wherein
in the step of mounting the rotation shaft (6), the first bearing (20) and the second bearing (22) are fixed onto the nacelle base plate (30A) so as to prevent at least a misalignment of each of the first bearing (20) and the second bearing (22) in a horizontal direction perpendicular to an axial direction of the rotation shaft (6).

5. The installation method for a shafting of a power generating apparatus of a renewable energy type according to claim 4, wherein
in the step of mounting the rotation shaft (6), a position in the horizontal direction of at least one of the first bearing (20) and the second bearing (22) with respect to the nacelle base plate (30A) is adjusted, and then the first bearing (20) and second bearing (22) are fixed onto the nacelle base plate (30A) in a state where the position is adjusted.

6. The installation method for a shafting of a power generating apparatus of a renewable energy type according to claim 5, wherein
in the step of mounting the rotation shaft (6), a relative position between said each of the bearings (20, 22) and the nacelle base plate (30A) in the horizontal direction is adjusted by placing the first bearing (20) and the second bearing (22) on the nacelle base plate (30A) so that a projection formed on one of said each of the bearings (20, 22) or the nacelle base plate (30A) to extend in the axial direction of the rotation shaft (6) is fit into a recess formed on the other one of each of the bearings (20, 22) or the nacelle base plate (30A) to extend in the axial direction, and by disposing a liner between the projection and the recess.

7. The installation method for a shafting of a power generating apparatus of a renewable energy type according to claim 4, wherein
in the step of mounting the rotation shaft (6), a relative position between each of the first bearing (20) and the second bearing (22) and the nacelle base plate (30A) is adjusted and then said each of the bearings (20, 22) is fixed onto the nacelle base plate (30A) using an eccentric pin (99).

8. The installation method for a shafting of a power generating apparatus of a renewable energy type according to claim 1, wherein
in the step of mounting the rotation shaft (6), a height of each of the first bearing (20) and the second bearing (22) with respect to the nacelle base plate (30A) is adjusted by inserting a shim (95, 96, 97, 98) between each of the first bearing (20) and the second bearing (22) and the nacelle base plate (30A).

9. The installation method for a shafting of a power generating apparatus of a renewable energy type according to claim 1, wherein
in the step of mounting the rotation shaft (6), after mounting the rotation shaft (6) onto the nacelle base plate (30A), an upper part of the bearing housing (21) of the first bearing (20) and an upper part of the bearing housing (23) of the second bearing (22) are connected by a connection frame (80).

10. The installation method for a shafting of a power generating apparatus of a renewable energy type according to claim 9, wherein
in the step of mounting the rotation shaft (6), a height of the connection frame (80) with respect to the nacelle base plate (30A) is adjusted by inserting a shim (95, 96, 97, 98) between the nacelle base plate (30A) and a leg of the connection frame (80) which connects the first bearing (20) and the second bearing (22), and then the leg is fixed onto the nacelle base plate (30A).

11. The installation method for a shafting of a power generating apparatus of a renewable energy type according to claim 1, wherein
the connection member (40) remains after mounting the rotation shaft (6) to the nacelle (30), the connection member (40) providing a connection between the bearing housing (21) of the first bearing (20) and the bearing housing (23) of the second bearing (22) while the power generating apparatus of a renewable energy type is operated.

12. A power generating apparatus of a renewable energy type which generates electrical power utilizing a renewable energy, the power generating apparatus including:
at least one blade (2);
a hub (4) to which the at least one blade (2) is attached;
a rotation shaft (6) coupled to the hub (4);
a first bearing (20) and a second bearing (22) which support the rotation shaft (6);
a nacelle (30) including a nacelle base plate (30A) which supports each of the bearings (20, 22) from below; and
a connection member (40) which connects the first bearing (20) and the second bearing (22) so that the first bearing (20) and the second bearing (22) are concentric with each other,
wherein the first bearing (20) and the second bearing (22) are connected by the connection member (40) so as to be concentric with each other by positioning the first bearing (20) and an end of the connection member (40) in a radial direction of the rotation shaft (6) by socket-and-spigot joint fitting, and positioning by the second bearing (22) and other end of the connection member (40) in the radial direction by socket-and-spigot joint (75) fitting.

13. The power generating apparatus of a renewable energy type according to claim 12, further comprising
a driven device which is attached to an end of the rotation shaft (6) opposite to the hub (4), supported by the nacelle base plate (30A), and configured to be driven by the rotation shaft (6),
wherein the first bearing (20) is a radial bearing disposed on a hub (4) side and the second bearing (22) is a thrust bearing disposed on a driven device side.

14. The power generating apparatus of a renewable energy type according to claim 13,
wherein the first bearing (20) is a double row cylindrical roller bearing and the second bearing (22) is a double row taper roller bearing.

15. The power generating apparatus of a renewable energy type according to claim 12,
wherein the first bearing (20) is disposed on the hub (4) side and the second bearing (22) is disposed at a position further from the hub (4) than the first bearing (20),
wherein the rotation shaft (6) includes a first area to which the first bearing (20) is attached and a second area to which the second bearing (22) is attached, the rotation shaft (6) having a diameter which decreases from the first area toward the second area,
wherein a first stepped portion (6A) which restricts an inner race of the first bearing (20) from moving toward the hub (4) side is formed on the first area and a second stepped portion (6B) which restricts an inner race of the second bearing (22) from moving toward the hub (4) side is formed on the second area, and
wherein an internal diameter of the inner race of the first bearing (20) is greater than a maximum diameter of the rotation shaft (6) at the second stepped portion (6B).

16. The power generating apparatus of a renewable energy type according to claim 12,
wherein the power generating apparatus of a renewable energy type is a wind turbine generator (1) which generates electrical power from a wind serving as a renewable energy.

## Patentansprüche

1. Installationsverfahren für eine Wellenführung einer Stromerzeugungsvorrichtung vom Typ erneuerbare Energie, wobei die Stromerzeugungsvorrichtung vom Typ erneuerbare Energie enthält:
mindestens ein Blatt (2),
eine Nabe (4), an der das mindestens eine Blatt (2) angebracht ist,
eine Drehwelle (6), die mit der Nabe (4) gekoppelt ist,
ein erstes Lager (20) und ein zweites Lager (22), die die Drehwelle (6) stützen, und
eine Gondel (30), die eine Gondelgrundplatte (30A) enthält, die jedes der Lager von unten her stützt, wobei das Verfahren umfasst:
einen Schritt des Montierens des ersten Lagers (20) und des zweiten Lagers (22) an die Drehwelle (6),
einen Schritt des Verbindens eines Lagergehäuses (21) des ersten Lagers (20) und eines Lagergehäuses (23) des zweiten Lagers (22) durch ein Verbindungselement (40) dergestalt, dass das erste Lager (20) und das zweite Lager (22) zueinander konzentrisch sind und
einen Schritt des Montierens der Drehwelle (6) auf der Gondelgrundplatte (30A) zusammen mit dem ersten Lager (20) und dem zweiten Lager (22) in einem Zustand, wo das erste Lager (20) und das zweite Lager (22) konzentrisch zueinander gehalten werden.

2. Installationsverfahren für eine Wellenführung einer Stromerzeugungsvorrichtung vom Typ erneuerbare Energie nach Anspruch 1, wobei
in dem Schritt des Verbindens durch das Verbindungselement (40) sowohl das Lagergehäuse (21) des ersten Lagers (20) als auch das Lagergehäuse (23) des zweiten Lagers (22) mit Bezug auf das Verbindungselement (40) in einer radialen Richtung der Drehwelle (6) durch eine Muffenverbindung (75) positioniert werden.

3. Installationsverfahren für eine Wellenführung einer Stromerzeugungsvorrichtung vom Typ erneuerbare Energie nach Anspruch 1, wobei
in dem Schritt des Montierens des ersten Lagers (20) und des zweiten Lagers (22) die Drehwelle (6) zuerst in das erste Lager (20) und dann in das zweite Lager (22) eingesetzt wird, von denen jedes eine nahtlose Ringform in einem Zustand hat, wo die Drehwelle (6) entlang der vertikalen Richtung aufrecht steht.

4. Installationsverfahren für eine Wellenführung einer Stromerzeugungsvorrichtung vom Typ erneuerbare Energie nach Anspruch 1, wobei
in dem Schritt des Montierens der Drehwelle (6) das erste Lager (20) und das zweite Lager (22) so auf der Gondelgrundplatte (30A) fixiert werden, dass mindestens eine Fehlausrichtung des ersten Lagers (20) und des zweiten Lagers (22) in einer horizontalen Richtung senkrecht zu einer axialen Richtung der Drehwelle (6) verhindert wird.

5. Installationsverfahren für eine Wellenführung einer Stromerzeugungsvorrichtung vom Typ erneuerbare Energie nach Anspruch 4, wobei
in dem Schritt des Montierens der Drehwelle (6) eine Position in der horizontalen Richtung des ersten Lagers (20) und/oder des zweiten Lagers (22) mit Bezug auf die Gondelgrundplatte (30A) justiert wird und dann das erste Lager (20) und das zweite Lager (22) auf der Gondelgrundplatte (30A) in einem Zustand fixiert werden, wo die Position justiert ist.

6. Installationsverfahren für eine Wellenführung einer Stromerzeugungsvorrichtung vom Typ erneuerbare Energie nach Anspruch 5, wobei
in dem Schritt des Montierens der Drehwelle (6) eine relative Position zwischen jedem der Lager (20, 22) und der Gondelgrundplatte (30A) in der horizontalen Richtung justiert, indem das erste Lager (20) und das zweite Lager (22) dergestalt auf der Gondelgrundplatte (30A) platziert werden, dass ein Vorsprung, der entweder an jedem der Lager (20, 22) oder an der Gondelgrundplatte (30A) so ausgebildet ist, dass er sich in der axialen Richtung der Drehwelle (6) erstreckt, in eine Aussparung eingepasst wird, die in dem jeweils anderen der beiden Lager (20, 22) oder der Gondelgrundplatte (30A) so ausgebildet ist, dass die sich in der axialen Richtung erstreckt, und indem eine Auskleidung zwischen dem Vorsprung und der Aussparung angeordnet wird.

7. Installationsverfahren für eine Wellenführung einer Stromerzeugungsvorrichtung vom Typ erneuerbare Energie nach Anspruch 4, wobei
in dem Schritt des Montierens der Drehwelle (6) eine relative Position zwischen sowohl dem ersten Lager (20) als auch dem zweiten Lager (22) und der Gondelgrundplatte (30A) justiert wird und dann jedes der Lager (20, 22) auf der Gondelgrundplatte (30A) unter Verwendung eines Exzenterstiftes (99) fixiert wird.

8. Installationsverfahren für eine Wellenführung einer Stromerzeugungsvorrichtung vom Typ erneuerbare Energie nach Anspruch 1, wobei
in dem Schritt des Montierens der Drehwelle (6) eine Höhe des ersten Lagers (20) und des zweiten Lagers (22) mit Bezug auf die Gondelgrundplatte (30A) justiert wird, indem eine Distanzscheibe (95, 96, 97, 98) zwischen sowohl dem ersten Lager (20) als auch dem zweiten Lager (22) und der Gondelgrundplatte (30A) eingeschoben wird.

9. Installationsverfahren für eine Wellenführung einer Stromerzeugungsvorrichtung vom Typ erneuerbare Energie nach Anspruch 1, wobei
in dem Schritt des Montierens der Drehwelle (6), nach dem Montieren der Drehwelle (6) auf der Gondelgrundplatte (30A), ein oberer Teil des Lagergehäuses (21) des ersten Lagers (20) und ein oberer Teil des Lagergehäuses (23) des zweiten Lagers (22) durch einen Verbindungsrahmen (80) verbunden werden.

10. Installationsverfahren für eine Wellenführung einer Stromerzeugungsvorrichtung vom Typ erneuerbare Energie nach Anspruch 9, wobei
in dem Schritt des Montierens der Drehwelle (6) eine Höhe des Verbindungsrahmens (80) mit Bezug auf die Gondelgrundplatte (30A) justiert wird, indem eine Distanzscheibe (95, 96, 97, 98) zwischen der Gondelgrundplatte (30A) und einem Schenkel des Verbindungsrahmens (80), der das erste Lager (20) und das zweite Lager (22) verbindet, eingeschoben wird und dann der Schenkel an der Gondelgrundplatte (30A) fixiert wird.

11. Installationsverfahren für eine Wellenführung einer Stromerzeugungsvorrichtung vom Typ erneuerbare Energie nach Anspruch 1, wobei
das Verbindungselement (40) nach dem Montieren der Drehwelle (6) an der Gondel (30) an seinem Platz bleibt, wobei das Verbindungselement (40) eine Verbindung zwischen dem Lagergehäuses (21) des ersten Lagers (20) und dem Lagergehäuse (23) des zweiten Lagers (22) bereitstellt, während die Stromerzeugungsvorrichtung vom Typ erneuerbare Energie betrieben wird.

12. Stromerzeugungsvorrichtung vom Typ erneuerbare Energie, die Elektrizität unter Nutzung einer erneuerbaren Energie erzeugt, wobei die Stromerzeugungsvorrichtung enthält:
mindestens ein Blatt (2),
eine Nabe (4), an der das mindestens eine Blatt (2) angebracht ist,
eine Drehwelle (6), die mit der Nabe (4) gekoppelt ist,
ein erstes Lager (20) und ein zweites Lager (22), die die Drehwelle (6) stützen,
eine Gondel (30), die eine Gondelgrundplatte (30A) enthält, die jedes der Lager (20, 22) von unten her stützt, und
ein Verbindungselement (40), das das erste Lager (20) und das zweite Lager (22) dergestalt verbindet, dass das erste Lager (20) und das zweite Lager (22) zueinander konzentrisch sind,
wobei das erste Lager (20) und das zweite Lager (22) durch das Verbindungselement (40) so verbunden werden, dass sie zueinander konzentrisch sind, indem das erste Lager (20) und ein Ende des Verbindungselements (40) in einer radialen Richtung der Drehwelle (6) mittels einer Muffenverbindung positioniert werden und das zweite Lager (22) und das andere Ende des Verbindungselements (40) in der radialen Richtung durch eine Muffenverbindung (75) positioniert werden.

13. Stromerzeugungsvorrichtung vom Typ erneuerbare Energie nach Anspruch 12, ferner umfassend:
eine angetriebene Vorrichtung, die an einem Ende der Drehwelle (6) gegenüber der Nabe (4) angebracht ist, durch die Gondelgrundplatte (30A) gestützt wird und dafür konfiguriert ist, durch die Drehwelle (6) angetrieben zu werden,
wobei das erste Lager (20) ein Radiallager ist, das auf einer Naben (4)-Seite angeordnet ist, und das zweite Lager (22) ein Schublager ist, das auf einer Seite der angetriebenen Vorrichtung angeordnet ist.

14. Stromerzeugungsvorrichtung vom Typ erneuerbare Energie nach Anspruch 13,
wobei das erste Lager (20) ein doppelreihiges Zylinderrollenlager ist und das zweite Lager (22) ein doppelreihiges Kegelrollenlager ist.

15. Stromerzeugungsvorrichtung vom Typ erneuerbare Energie nach Anspruch 12,
wobei das erste Lager (20) auf der Seite der Nabe (4) angeordnet ist und das zweite Lager (22) an einer Position angeordnet ist, die weiter von der Nabe (4) entfernt liegt als das erste Lager (20),
wobei die Drehwelle (6) einen ersten Bereich enthält, an dem das erste Lager (20) angebracht ist, und einen zweiten Bereich enthält, an dem das zweite Lager (22) angebracht ist, wobei die Drehwelle (6) einen Durchmesser hat, der von dem ersten Bereich in Richtung des zweiten Bereichs kleiner wird,
wobei ein erster gestufter Abschnitt (6A), der verhindert, dass ein innerer Laufring des ersten Lagers (20) sich in Richtung der Seite der Nabe (4) verschiebt, in dem ersten Bereich ausgebildet ist, und ein zweiter gestufter Abschnitt (6B) der verhindert, dass ein innerer Laufring des zweiten Lagers (22) sich in Richtung der Seite der Nabe (4) verschiebt, in dem zweiten Bereich ausgebildet ist, und
wobei ein Innendurchmesser des inneren Laufrings des ersten Lagers (20) größer ist als ein maximaler Durchmesser der Drehwelle (6) an dem zweiten gestuften Abschnitt (6B).

16. Stromerzeugungsvorrichtung vom Typ erneuerbare Energie nach Anspruch 12,
wobei die Stromerzeugungsvorrichtung vom Typ erneuerbare Energie ein Windturbinengenerator (1) ist, der Elektrizität aus Wind gewinnt, der als eine erneuerbare Energie dient.

## Revendications

1. Procédé d'installation pour une ligne d'arbre d'un appareil de génération d'énergie du type à énergie renouvelable, l'appareil de génération d'énergie du type à énergie renouvelable comprenant :
au moins une pale (2) ;
un moyeu (4) sur lequel la au moins une pale (2) est fixée ;
un arbre de rotation (6) relié au moyeu (4) ;
un premier palier (20) et un deuxième palier (22) qui supportent l'arbre de rotation (6) ; et
une nacelle (30) comprenant une plaque de base de nacelle (30A) qui supporte chacun des paliers par dessous, le procédé comportant :
une étape de montage du premier palier (20) et du deuxième palier (22) sur l'arbre de rotation (6) ;
une étape de raccordement d'un logement de palier (21) du premier palier (20) et d'un logement de palier (23) du deuxième palier (22) par un élément de raccordement (40) de telle sorte que le premier palier (20) et le deuxième palier (22) sont concentriques l'un à l'autre ; et
une étape de montage de l'arbre de rotation (6) sur la plaque de base de nacelle (30A) avec le premier palier (20) et le deuxième palier (22) dans un état où le premier palier (20) et le deuxième palier (22) sont maintenus concentriques l'un à l'autre.

2. Procédé d'installation pour une ligne d'arbre d'un appareil de génération d'énergie du type à énergie renouvelable selon la revendication 1, selon lequel dans l'étape de raccordement par l'élément de raccordement (40), chacun du logement de palier (21) du premier palier (20) et du logement de palier (23) du deuxième palier (22) est positionné par rapport à l'élément de raccordement (40) dans une direction radiale de l'arbre de rotation (6) par un montage à joint à tourillon et embase (75).

3. Procédé d'installation pour une ligne d'arbre d'un appareil de génération d'énergie du type à énergie renouvelable selon la revendication 1, selon lequel dans l'étape de montage du premier palier (20) et du deuxième palier (22), l'arbre de rotation (6) est inséré dans l'ordre dans le premier palier (20) et le deuxième palier (22) dont chacun a une forme annulaire sans joint dans un état où l'arbre de rotation (6) se tient debout le long de la direction verticale.

4. Procédé d'installation pour une ligne d'arbre d'un appareil de génération d'énergie du type à énergie renouvelable selon la revendication 1, selon lequel dans l'étape de montage de l'arbre de rotation (6), le premier palier (20) et le deuxième palier (22) sont fixés sur la plaque de base de nacelle (30A) de façon à empêcher au moins un défaut d'alignement de chacun du premier palier (20) et du deuxième palier (22) dans une direction horizontale perpendiculaire à la direction axiale de l'arbre de rotation (6).

5. Procédé d'installation pour une ligne d'arbre d'un appareil de génération d'énergie du type à énergie renouvelable selon la revendication 4, selon lequel dans l'étape de montage de l'arbre de rotation (6), une position dans la direction horizontale d'au moins un du premier palier (20) et du deuxième palier (22) par rapport à la plaque de base de nacelle (30A) est ajustée, et ensuite le premier palier (20) et le deuxième palier (22) sont fixés sur la plaque de base de nacelle (30A) dans un état où la position est ajustée.

6. Procédé d'installation pour une ligne d'arbre d'un appareil de génération d'énergie du type à énergie renouvelable selon la revendication 5, selon lequel dans l'étape de montage de l'arbre de rotation (6), une position relative entre chacun des paliers (20, 22) et la plaque de base de nacelle (30A) dans la direction horizontale est ajustée en plaçant le premier palier (20) et le deuxième palier (22) sur la plaque de base de nacelle (30A) de telle sorte qu'une saillie formée sur l'un de chacun desdits paliers (20, 22) ou de la plaque de base de nacelle (30A) pour s'étendre dans la direction axiale de l'arbre de rotation (6) est insérée dans un renfoncement formé sur l'autre de chacun des paliers (20, 22) ou de la plaque de base de nacelle (30A) pour s'étendre dans la direction axiale, et en disposant un revêtement entre la saillie et le renfoncement.

7. Procédé d'installation pour une ligne d'arbre d'un appareil de génération d'énergie du type à énergie renouvelable selon la revendication 4, selon lequel dans l'étape de montage de l'arbre de rotation (6), une position relative entre chacun du premier palier (20) et du deuxième palier (22) et la plaque de base de nacelle (30A) est ajustée et ensuite chacun desdits paliers (20, 22) est fixé sur la plaque de base de nacelle (30A) en utilisant un axe excentrique (99).

8. Procédé d'installation pour une ligne d'arbre d'un appareil de génération d'énergie du type à énergie renouvelable selon la revendication 1, selon lequel dans l'étape de montage de l'arbre de rotation (6), une hauteur de chacun du premier palier (20) et du deuxième palier (22) par rapport à la plaque de base de nacelle (30A) est ajustée en insérant une cale (95, 96, 97, 98) entre chacun du premier palier (20) et du deuxième palier (22) et la plaque de base de nacelle (30A).

9. Procédé d'installation pour une ligne d'arbre d'un appareil de génération d'énergie du type à énergie renouvelable selon la revendication 1, selon lequel dans l'étape de montage de l'arbre de rotation (6), après montage de l'arbre de rotation (6) sur la plaque de base de nacelle (30A), une partie supérieure du logement de palier (21) du premier palier (20) et une partie supérieure du logement de palier (23) du deuxième palier (22) sont reliées par un bâti de raccordement (80).

10. Procédé d'installation pour une ligne d'arbre d'un appareil de génération d'énergie du type à énergie renouvelable selon la revendication 9, selon lequel dans l'étape de montage de l'arbre de rotation (6), une hauteur du bâti de raccordement (80) par rapport à la plaque de base de nacelle (30A) est ajustée en insérant une cale (95, 96, 97, 98) entre la plaque de base de nacelle (30A) et une patte du bâti de raccordement (80) qui relie le premier palier (20) et le deuxième palier (22), et la patte est alors fixée sur la plaque de base de nacelle (30A).

11. Procédé d'installation pour une ligne d'arbre d'un appareil de génération d'énergie du type à énergie renouvelable selon la revendication 1, selon lequel l'élément de raccordement (40) reste après montage de l'arbre de rotation (6) sur la nacelle (30), l'élément de raccordement (40) assurant une liaison entre le logement de palier (21) du premier palier (20) et le logement de palier (23) du deuxième palier (22) alors que l'appareil de génération d'énergie du type à énergie renouvelable est en fonctionnement.

12. Appareil de génération d'énergie du type à énergie renouvelable, qui génère de l'énergie électrique en utilisant une énergie renouvelable, l'appareil de génération d'énergie comprenant :
au moins une pale (2) ;
un moyeu (4) sur lequel la au moins une pale (2) est fixée ;
un arbre de rotation (6) relié au moyeu (4) ;
un premier palier (20) et un deuxième palier (22) qui supportent l'arbre de rotation (6) ;
une nacelle (30) comprenant une plaque de base de nacelle (30A) qui supporte chacun des paliers (20, 22) par dessous ; et
un élément de raccordement (40) qui relie le premier palier (20) et le deuxième palier (22) de telle sorte que le premier palier (20) et le deuxième palier (22) sont concentriques l'un à l'autre,
dans lequel le premier palier (20) et le deuxième palier (22) sont reliés par l'élément de raccordement (40) de façon à être concentriques l'un à l'autre en positionnant le premier palier (20) et une extrémité de l'élément de raccordement (40) dans une direction radiale de l'arbre de rotation (6) grâce à un montage à joint à tourillon et embase, et en positionnant le deuxième palier (22) et l'autre extrémité de l'élément de raccordement (40) dans la direction radiale grâce à un montage à joint à tourillon et embase (75).

13. Appareil de génération d'énergie du type à énergie renouvelable selon la revendication 12, comportant en outre
un dispositif entraîné qui est fixé sur une extrémité de l'arbre de rotation (6) opposée au moyeu (4), supporté par la plaque de base de nacelle (30A), et configuré pour être entraîné par l'arbre de rotation (6),
dans lequel le premier palier (20) est un palier radial disposé sur un côté du moyeu (4) et le deuxième palier (22) est une butée disposée sur un côté de dispositif entraîné.

14. Appareil de génération d'énergie du type à énergie renouvelable selon la revendication 13,
dans lequel le premier palier (20) est un palier à rouleau cylindrique à double rangée et le deuxième palier (22) est un palier à rouleau conique à double rangée.

15. Appareil de génération d'énergie du type à énergie renouvelable selon la revendication 12,
dans lequel le premier palier (20) est disposé sur le côté du moyeu (4) et le deuxième palier (22) est disposé dans une position davantage à l'écart du moyeu (4) que le premier palier (20),
dans lequel l'arbre de rotation (6) comprend une première zone sur laquelle le premier palier (20) est fixé et une deuxième zone sur laquelle le deuxième palier (22) est fixé, l'arbre de rotation (6) ayant un diamètre qui diminue de la première zone vers la deuxième zone,
dans lequel une première partie étagée (6A) qui limite le déplacement d'une piste intérieure du premier palier (20) vers le côté du moyeu (4) est formée sur la première zone et une deuxième partie étagée (6B) qui limite le déplacement d'une piste intérieure du deuxième palier (22) vers le côté du moyeu (4) est formée sur la deuxième zone, et
dans lequel un diamètre interne de la piste intérieure du premier palier (20) est plus grand qu'un diamètre maximum de l'arbre de rotation (6) au niveau de la deuxième partie étagée (6B).

16. Appareil de génération d'énergie du type à énergie renouvelable selon la revendication 12,
dans lequel l'appareil de génération d'énergie du type à énergie renouvelable est une éolienne (1) qui génère de l'énergie électrique à partir du vent servant d'énergie renouvelable.
